# EUROPEAN PATENT APPLICATION

(11) **EP 4 393 842 A1**
(43) Date of publication of application: **03.07.2024**
(21) Application number: 22860568.9
(22) Date of filing: 25.08.2022
(51) Int. Cl.: B65G 1/04, B65G 1/137, G06Q 10/08

(54) **WAREHOUSING SYSTEM AND WAREHOUSING SCHEDULING METHOD**

(30) Priority: 27.08.2021 CN 202122055035 U; 27.08.2021 CN 202122054995 U; 27.05.2022 CN 202210590668
(71) Applicant: Beijing Geekplus Technology Co., Ltd., Chaoyang District Beijing 100102 (CN)
(72) Inventor: WANG, Xu, Beijing 100102 (CN); ZHANG, Yan, Beijing 100102 (CN); XIONG, Yinghui, Beijing 100102 (CN); FENG, Yu, Beijing 100102 (CN); YUAN, Li, Beijing 100102 (CN)
(74) Representative: Manna, Sara
(86) International application number: PCT/CN2022/114669
(87) International publication number: WO 2023/025222

(57) **Abstract**

A warehousing system and a warehousing scheduling method. The warehousing system comprises a warehouse storage area (7), a workstation area (8), a carrying robot (9) and a transfer robot. The warehouse storage area (7) comprises a plurality of shelves (5) which are arranged in a matrix, and a container temporary storage area and a container storage area are provided on each shelf (5). The workstation area (8) comprises at least one workstation, which is configured to be used for processing a container (6). The carrying robot (9) is configured to be responsible for the deployment of the container (6) between the container temporary storage area and the container storage area. The transfer robot is configured to be responsible for the exchange of the container (6) between the container temporary storage area and the workstation. The warehousing system and the warehousing scheduling method require no conveying line apparatus, thereby improving the warehouse shipment efficiency of a container and the sorting efficiency of a target object, and saving on transport capacity resources of a robot.

## Description

### CROSS-REFERENCE TO RELATED APPLICATIONS

This application is provided based on and claims priority to the following Chinese patent applications:
Chinese Patent Application No. 202122055035.3, filed on August 27, 2021;
Chinese Patent Application No. 202122054995.8, filed on August 27, 2021; and
Chinese Patent Application No. 202210590668.0, filed on May 27, 2022,
which are incorporated herein by reference in their entireties.

### TECHNICAL FIELD

The present disclosure relates to the field of logistics equipment, and in particular, to a warehousing system, a shelf, a transfer robot, a transfer system, a warehousing scheduling method, a warehousing scheduling device, a computing device, a computer-readable storage medium, and a computer program product.

### BACKGROUND

With the improvement of industrial automation, transfer robots have increasing applications, are applied more widely, and can replace manual transport and save manpower and material resources. However, the existing transfer robot can only be responsible for transportation of a receptacle, and cannot pick up and place the receptacle. The receptacle needs to be manually placed on a transport robot, and then, the receptacle is picked up manually from the transport robot. Moreover, a placement location of the receptacle on the transport robot cannot be accurately limited and positioned. Therefore, automated operation of the entire procedure cannot be achieved.

### SUMMARY

To resolve the problems existing in the prior art, the present disclosure provides a warehousing system, a shelf, a transfer robot, a transfer system, a warehousing scheduling method, a warehousing scheduling device, a computing device, a computer-readable storage medium, and a computer program product.

According to a first aspect of the present disclosure, a warehousing system is provided, including: a warehouse storage area, including a plurality of shelves arranged in a matrix, where a receptacle cache region and a receptacle storage region are arranged on the shelf; a workstation area, including at least one workstation, where the workstation is configured for processing a receptacle; a transport robot, configured to be responsible for deploying the receptacle between the receptacle cache region and the receptacle storage region; and a transfer robot, configured to be responsible for exchanging the receptacle between the receptacle cache region and the workstation.

In some embodiments, in the warehouse storage area, a plurality of transverse channels are formed between a plurality of transversely arranged shelves, and a plurality of longitudinal channels are formed between a plurality of longitudinally arranged shelves; and the plurality of transverse channels and the plurality of longitudinal channels are arranged in a staggered manner.

In some embodiments, the transverse channel is configured for the transfer robot to pass; and the vertical channel is configured for the transport robot to pass.

In some embodiments, the transport robot is configured to be switched from one longitudinal channel to another longitudinal channel through the transverse channel.

In some embodiments, the transverse channel is configured for different transfer robots to travel simultaneously in both directions.

In some embodiments, the receptacle cache region and the receptacle storage region are arranged sequentially alternately in a vertical direction of the shelf; or at least one layer of receptacle cache region is arranged, and the at least one layer of receptacle cache region is located below the receptacle storage region.

In some embodiments, a lowest layer of the shelf is the receptacle cache region, and the receptacle cache region includes a receptacle cache berth and a cache region channel arranged adjacent and parallel to each other in a horizontal direction. The transfer robot is configured to travel in the cache region channel when being fully-loaded or unloaded.

In some embodiments, the cache region channel extends along a longitudinal direction of the shelf, to form a longitudinal cache region channel; and/or the cache region channel extends along a transverse direction of the shelf, to form a transverse cache region channel.

In some embodiments, an unloaded travel channel is formed between a bottom portion of the receptacle cache berth and the ground for the transfer robot to travel when the transfer robot is unloaded.

In some embodiments, the transfer robot is configured to transfer the receptacle on the receptacle cache region to a shelf platform of the workstation; and the workstation is configured to process the receptacle located on the shelf platform.

In some embodiments, the workstation includes at least one processing region, and is configured to process the receptacle on the transfer robot located in the processing region.

In some embodiments, the workstation is configured to send an instruction of picking up the receptacle from the receptacle cache region to a next transfer robot after the processing on the receptacle on the transfer robot in the processing region is completed.

In some embodiments, the workstation includes at least one queuing region, and the transfer robot is configured to queue sequentially in the queuing region when the processing region is occupied.

In some embodiments, the processing region corresponds to the queuing region, and at least two processing regions and at least two queuing regions are arranged respectively.

In some embodiments, the workstation includes a display, where the display is configured to display information for guiding operation personnel.

In some embodiments, the workstation includes a light guidance device, and the light guidance device is configured to project information for assisting operation personnel to perform an operation.

In some embodiments, the workstation includes an interaction button, and the interaction button is configured for operation personnel to confirm interaction with a system after the operation personnel complete an operation.

In some embodiments, the workstation includes a cargo receptacle position and attitude detection device, where the cargo receptacle position and attitude detection device is configured to detect an attitude of the receptacle on the transfer robot.

In some embodiments, the workstation includes a safety protection device, and the safety protection device is a protection door configured to prevent the transfer robot from entering the workstation.

In some embodiments, the workstation includes a safety protection device and a control unit, where the safety protection device is a detection sensor; and the control unit sends an instruction of stopping entering the workstation to the transfer robot based on an electrical signal detected by the detection sensor and indicating entering the processing region of the workstation by mistake.

In some embodiments, the workstation includes an identification device, and the identification device is configured to obtain information about the receptacle on the transfer robot.

In some embodiments, the workstation includes a visual identification device and a control unit, and the identification device is configured to: identify a type and a quantity of goods in the receptacle; and/or identify an operation gesture of operation personnel; and the control unit sends an alarm signal based on error information obtained by the visual identification device.

In some embodiments, a high-speed travel area is arranged between the warehouse storage area and the workstation area; and a travel speed of the transfer robot in the high-speed travel area is greater than a travel speed of the transfer robot in the warehouse storage area.

According to a second aspect of the present disclosure, a shelf is provided. The shelf is used in the warehousing system according to the first aspect of the present disclosure. The shelf includes a receptacle cache region and a receptacle storage region.

In some embodiments, the receptacle cache region and the receptacle storage region are arranged sequentially alternately in a vertical direction of the shelf; or at least one layer of receptacle cache region is arranged, and the at least one layer of receptacle cache region is located below the receptacle storage region.

In some embodiments, a lowest layer of the shelf is the receptacle cache region, and the receptacle cache region includes a receptacle cache berth and a cache region channel arranged adjacent and parallel to each other in a horizontal direction.

In some embodiments, the cache region channel extends along a longitudinal direction of the shelf, to form a longitudinal cache region channel; and/or the cache region channel extends along a transverse direction of the shelf, to form a transverse cache region channel.

According to a third aspect of the present disclosure, a transfer robot is provided. The transfer robot is used in the warehousing system according to the first aspect of the present disclosure. The transfer robot includes: a chassis mechanism; a lifting mechanism arranged on the chassis mechanism; and a top plate arranged on the lifting mechanism, and driven by the lifting mechanism to rise or fall. A positioning mechanism configured to be fitted with a bottom portion of a receptacle is arranged on a surface of the top plate for contact with the receptacle, and the top plate is configured to raise or lower the receptacle.

In some embodiments, the positioning mechanism includes a positioning pin or a positioning hole. The positioning pin is arranged on the top plate, and the positioning hole configured to be fitted with the positioning pin is arranged in the bottom portion of the receptacle; or the positioning hole is arranged in the top plate, and the positioning pin configured to be fitted with the positioning hole is arranged at the bottom portion of the receptacle.

In some embodiments, at least two positioning pins or positioning holes are arranged, and distributed in regions on two opposite sides of the top plate or the receptacle.

In some embodiments, at least a top surface of the positioning pin is of a conical surface structure, and a shape of the positioning hole matches with a shape of the positioning pin.

In some embodiments, the lifting mechanism further includes a drive assembly and a scissor assembly including at least one scissor unit, where the scissor assembly has a bottom end movably connected to the chassis mechanism, and a top end movably connected to the top plate, and the drive assembly is configured to drive the scissor assembly to rise or fall in a vertical direction.

In some embodiments, the scissor unit includes two, a first connecting rod component and a second connecting rod component, arranged in an intersecting manner and hinged to each other at an intersection; a top end of the first connecting rod component of the scissor unit adjacent to the top plate is hinged to the top plate, and a top end of the second connecting rod component of the scissor unit adjacent to the top plate is configured to move in a horizontal direction relative to the top plate; a bottom end of the first connecting rod component of the scissor unit adjacent to the chassis mechanism is hinged to the chassis mechanism, and a bottom end of the second connecting rod component of the scissor unit adjacent to the chassis mechanism is configured to move in the horizontal direction relative to the chassis mechanism; and two adjacent scissor units are hinged to each other.

In some embodiments, a first guide mechanism extending along the horizontal direction is arranged at a bottom portion of the top plate, and the second connecting rod component of the scissor unit adjacent to the top plate is configured to move horizontally in the first guide mechanism; and a second guide mechanism extending along the horizontal direction is arranged at a top portion of the chassis mechanism, and the second connecting rod component of the scissor unit adjacent to the chassis mechanism is configured to move horizontally in the second guide mechanism.

In some embodiments, a roller is arranged at an end head of the second connecting rod component of the scissor unit configured to be fitted with the first guide mechanism or the second guide mechanism, and the roller is configured to roll along the first guide mechanism or the second guide mechanism.

In some embodiments, the scissor assembly includes two scissor units, the scissor unit located above includes a first upper connecting rod component and a second upper connecting rod component hinged to each other, and the scissor unit located below includes a first lower connecting rod component and a second lower connecting rod component hinged to each other; a top end of the first upper connecting rod component is hinged to the top plate, a bottom end of the first upper connecting rod component is hinged to a top end of the first lower connecting rod component, a top end of the second upper connecting rod component is supported at a bottom portion of the top plate and configured to move in the horizontal direction relative to the top plate, and a bottom end of the second upper connecting rod component is hinged to a top end of the second lower connecting rod component; and a bottom end of the first lower connecting rod component is hinged to the chassis mechanism, and a bottom end of the second lower connecting rod component is supported at the chassis mechanism and configured to move in the horizontal direction relative to the chassis mechanism.

In some embodiments, the drive assembly includes a rocker, a drive motor, and a cam connected to an output end of the drive motor, where one end of the rocker is hinged to the cam, and the other end of the rocker is hinged to the scissor assembly; and the drive motor is configured to drive the scissor assembly to rise or fall through the rocker.

According to a fourth aspect of the present disclosure, a transfer system is provided, including the transfer robot according to the third aspect of the present disclosure and at least one shelf, where the transfer robot is configured to raise a receptacle located on the shelf or is configured to place a receptacle on a top plate onto the shelf.

In some embodiments, the shelf includes a shelf body, the shelf body includes a plurality of first receptacle berths arranged in a row, the first receptacle berth includes a support portion configured to support a receptacle, and the support portion has an open end for the transfer robot to pass.

In some embodiments, the shelf further includes a second receptacle berth configured for placing the receptacle, the second receptacle berth is arranged above the first receptacle berth, and the transfer system further includes a transport robot, where the transport robot is configured to transport the receptacle at the second receptacle berth to the first receptacle berth.

In some embodiments, at least one layer of first receptacle berth is arranged and located at a bottom portion of the second receptacle berth on the shelf body.

According to a fifth aspect of the present disclosure, a warehousing scheduling method is provided. The warehousing scheduling method is performed by using the warehousing system according to the first aspect of the present disclosure, and includes: determining an occupancy proportion of cache berths in a receptacle cache region, where the receptacle cache region includes at least one cache berth; determining a receptacle score of a receptacle stored at each cache berth in the receptacle cache region, in a case that the occupancy proportion of the cache berths exceeds a set proportion threshold, where the receptacle score is determined based on a to-be-executed picking task and a quantity of target objects in the receptacle; and determining a to-be-released cache berth in the receptacle cache region according to the receptacle score, and generating a return task for a to-be-returned receptacle at the to-be-released cache berth, where the return task is configured to instruct to return the to-be-returned receptacle from the to-be-released cache berth to a receptacle storage region.

In some embodiments, the determining an occupancy proportion of cache berths in a receptacle cache region includes: determining a quantity of occupied cache berths in the receptacle cache region; determining a quantity of to-be-occupied cache berths and a quantity of to-be-released cache berths according to a current receptacle transferring task; and determining the occupancy proportion of the cache berths in the receptacle cache region according to the quantity of occupied cache berths, the quantity of to-be-occupied cache berths, and the quantity of to-be-released cache berths.

In some embodiments, the determining a to-be-released cache berth in the receptacle cache region according to the receptacle score includes: determining a difference between the occupancy proportion and the set proportion threshold, and determining a quantity of to-be-released cache berths according to the difference; and sorting the receptacle scores of the receptacles stored at the cache berths and selecting to-be-released cache berths whose quantity is the quantity according to a sorting result.

In some embodiments, the generating a return task for a to-be-returned receptacle at the to-be-released cache berth includes: determining a target storage berth corresponding to the to-be-released cache berth; and generating the return task based on the to-be-released cache berth and the target storage berth, where the return task is configured for returning the to-be-returned receptacle stored at the to-be-released cache berth to the target storage berth.

In some embodiments, before the determining a receptacle score of a receptacle stored at each cache berth in the receptacle cache region, the method further includes: determining, every first preset duration, a to-be-transferred receptacle in the receptacle storage region, where the to-be-transferred receptacle is to be transferred to the receptacle cache region; determining a first cache berth corresponding to the to-be-transferred receptacle in the receptacle cache region; and generating a receptacle transferring task for the to-be-transferred receptacle based on a first storage berth and the first cache berth, where the first storage berth is a storage location of the to-be-transferred receptacle in the receptacle storage region, and the receptacle transferring task is configured to instruct to transfer the to-be-transferred receptacle from the first storage berth to the first cache berth.

In some embodiments, the warehousing system includes at least two lanes, and the receptacle storage region and the receptacle cache region are arranged in each lane. The determining a first cache berth corresponding to the to-be-transferred receptacle in the receptacle cache region includes: determining whether there is an available cache berth in a first receptacle cache region, where the first receptacle cache region and the receptacle storage region in which the to-be-transferred receptacle is located belong to a same lane; determining the first cache berth from the available cache berth, if there is the available cache berth; and determining the first cache berth from a second receptacle cache region, if there is no available cache berth, where the second receptacle cache region and the receptacle storage region in which the to-be-transferred receptacle is located do not belong to a same lane.

In some embodiments, the first cache berth and the first storage berth belong to a same lane. The generating a receptacle transferring task for the to-be-transferred receptacle based on a first storage berth and the first cache berth includes: determining whether a receptacle is currently stored at the first cache berth; generating a replacement task for the receptacle stored at the first cache berth, , if the receptacle is stored at the first cache berth, where the replacement task is configured to instruct a transport robot to return the receptacle stored at the first cache berth to the receptacle storage region and transport the to-be-transferred receptacle from the first storage berth to the first cache berth; and generating a first receptacle transport task for the to-be-transferred receptacle based on the first storage berth and the first cache berth, if no receptacle is stored, where the first receptacle transport task is configured to instruct the transport robot to transport the to-be-transferred receptacle from the first storage berth to the first cache berth.

In some embodiments, the first cache berth and the first storage berth belong to different lanes. The generating a receptacle transferring task for the to-be-transferred receptacle based on a first storage berth and the first cache berth includes: generating a second receptacle transport task for the to-be-transferred receptacle based on the first storage berth, where the second receptacle transport task is configured to instruct a transport robot to transport the to-be-transferred receptacle from the first storage berth to a second cache berth, and the second cache berth and the first storage berth belong to a same lane; and generating a transfer task for the to-be-transferred receptacle based on the second cache berth and the first cache berth in a case that the to-be-transferred receptacle is transported to the second cache berth, where the transfer task is configured to instruct a transfer robot to transfer the to-be-transferred receptacle from the second cache berth to the first cache berth.

In some embodiments, the generating a transfer task for the to-be-transferred receptacle based on the second cache berth and the first cache berth includes: determining whether a receptacle is currently stored at the first cache berth; generating a third receptacle transport task for the receptacle stored at the first cache berth, if the receptacle is stored at the first cache berth, where the third receptacle transport task is configured to instruct the transport robot to move the receptacle stored at the first cache berth from the first cache berth to a second storage berth, and the first cache berth and the second storage berth are located in a same lane or different lanes; and generating the transfer task for the to-be-transferred receptacle based on the second cache berth and the first cache berth, in a case that the receptacle stored at the first cache berth is transported from the first cache berth.

In some embodiments, before the determining a receptacle score of a receptacle stored at each cache berth in the receptacle cache region, the method further includes: determining a quantity of picking tasks matching with at least one target object group in a first receptacle, where the first receptacle is any receptacle stored in the receptacle cache region and the receptacle storage region, and target objects with a same target object identifier form one target object group; determining a popularity value of the first receptacle according to the quantity of picking tasks matching with the at least one target object group; determining a receptacle type of the first receptacle, and determining a base score of the first receptacle according to the receptacle type; and determining a receptacle score of the first receptacle according to the popularity value and the base score.

In some embodiments, the determining a base score of the first receptacle according to the receptacle type includes: determining that the base score of the first receptacle is a first set value, in a case that the receptacle type of the first receptacle is a hit receptacle, where the hit receptacle refers to a receptacle selected to execute the picking task, and the first set value is a lower boundary value of a first score range; determining that the base score of the first receptacle is a second set value, in a case that the receptacle type of the first receptacle is a non-hit receptacle, and the first receptacle is a receptacle in the receptacle cache region, where the second set value is a lower boundary value of a second score range; and determining that the base score of the first receptacle is a third set value, in a case that the receptacle type of the first receptacle is a non-hit receptacle, and the first receptacle is a receptacle in the receptacle storage region, where the third set value is a lower boundary value of a third score range. The first score range, the second score range, and the third score range are obtained through division based on the receptacle scores, the first set value is larger than the second set value, and the second set value is larger than the third set value.

According to a sixth aspect of the present disclosure, a warehousing scheduling device is provided, including: a first determining module, configured to determine an occupancy proportion of cache berths in a receptacle cache region, where the receptacle cache region includes at least one cache berth; a second determining module, configured to determine a receptacle score of a receptacle stored at each cache berth in the receptacle cache region, in a case that the occupancy proportion of the cache berths exceeds a set proportion threshold, where the receptacle score is determined based on a to-be-executed picking task and a quantity of target objects in the receptacle; and a generation module, configured to determine a to-be-released cache berth in the receptacle cache region according to the receptacle score, and generate a return task for a to-be-returned receptacle at the to-be-released cache berth, where the return task is configured to instruct to return the to-be-returned receptacle from the to-be-released cache berth to a receptacle storage region.

According to a seventh aspect of the present disclosure, a computing device is provided, including: a memory and a processor. The memory is configured to store computer-executable instructions. The processor is configured to execute the computer-executable instructions, to implement the steps of the foregoing warehousing scheduling method.

According to an eighth aspect of the present disclosure, a computer-readable storage medium is provided, which has computer-executable instructions stored therein. When the instructions are executed by a processor, the steps of the foregoing warehousing scheduling method are implemented.

According to a ninth aspect of the present disclosure, a computer program product is provided, including a computer program. When the computer program is executed by a processor, the steps of the foregoing warehousing scheduling method are implemented.

Beneficial effects of the present disclosure are: the transfer robot can implement lifting of the receptacle, and the positioning mechanism on the top plate thereof can match the receptacle, to accurately position a location of the receptacle. In the receptacle transfer system, the transfer robot can pick up and place the receptacle on the shelf by itself, which saves labor. In addition, the location of the receptacle can be accurately positioned through the positioning mechanism, which improves the accuracy of the location of the receptacle and the stability. The transfer robot can not only transport the receptacle, but also pick up and place the receptacle by itself, which achieves automated operation of the entire procedure.

The warehousing system of the present disclosure does not require a conveyor line device, which greatly improves the flexibility of the solution and has advantages such as convenient rapid construction and dynamic addition or removal of a robot.

The warehousing scheduling method provided in the present disclosure includes: determining an occupancy proportion of cache berths in a receptacle cache region, where the receptacle cache region includes at least one cache berth; determining, in a case that the occupancy proportion of the cache berths exceeds a set proportion threshold, a receptacle score of a receptacle stored at each cache berth in the receptacle cache region, where the receptacle score is determined based on a to-be-executed picking task and a quantity of target objects in the receptacle; and determining a to-be-released cache berth in the receptacle cache region according to the receptacle score, and generating a return task for a to-be-returned receptacle at the to-be-released cache berth, where the return task is configured to instruct to return the to-be-returned receptacle from the to-be-released cache berth to the receptacle storage region.

In this case, the occupancy proportion of the cache berths in the receptacle cache region can be determined. In a case that the occupancy proportion of the cache berths exceeds the set proportion threshold, indicating that too many receptacles are stored in the receptacle cache region, and there may not be enough cache berths for performing receptacle handover, the to-be-released cache berth in the receptacle cache region may be determined based on the receptacle scores of the receptacles stored at the cache berths in the receptacle cache region, and the corresponding return task is generated to return the to-be-returned receptacle at the to-be-released cache berth to the receptacle storage region, thereby dynamically controlling the occupancy proportion of the cache berths in the receptacle cache region, to ensure that there are enough cache berths in the receptacle cache region for the receptacle handover. In this way, in addition to being configured for receptacle handover, the receptacle cache region may also be configured for receptacle storage. That is, after picking of a receptacle at the workstation is completed, after conveying the receptacle back to the receptacle cache region from the workstation, the transfer robot does not need to convey the receptacle back to the receptacle storage region, and the receptacle can be stored directly in the cache region. Subsequently, transferring of the receptacle in the cache region is dynamically controlled based on the occupancy proportions of the cache berths in the receptacle cache region. The receptacle can be stored in the receptacle cache region, which improves reusability of the receptacle, thereby improving efficiency of outbound delivery of receptacles and target object picking efficiency, and greatly saving transportation resources of robots.

### BRIEF DESCRIPTION OF THE DRAWINGS

The accompanying drawings, which are incorporated into the specification and constitute a part of this specification, show embodiments of the present disclosure and are used for describing a principle of the present disclosure together with this specification.
FIG. 1 is a schematic diagram of an overall structure of a transfer robot according to an embodiment of the present disclosure;
FIG. 2 is a schematic structural diagram of a receptacle according to an embodiment of the present disclosure;
FIG. 3 is a schematic structural diagram of a top plate of a transfer robot according to an embodiment of the present disclosure;
FIG. 4 is an enlarged view of a part A in FIG. 3;
FIG. 5 is a cross-sectional diagram of a top plate of a transfer robot according to an embodiment of the present disclosure;
FIG. 6 is a schematic structural diagram of a lifting mechanism of a transfer robot according to an embodiment of the present disclosure;
FIG. 7 is a schematic diagram of an overall structure of a receptacle transfer system according to an embodiment of the present disclosure;
FIG. 8 is an overall distribution diagram of a warehousing system according to an embodiment of the present disclosure;
FIG. 9 is a schematic structural diagram of two adjacent shelves in FIG. 8;
FIG. 10 is a top view of some shelves in FIG. 8;
FIG. 11 is a structural layout diagram of a workstation according to an embodiment of the present disclosure;
FIG. 12A is a schematic structural diagram of a warehousing system according to an embodiment of the present disclosure;
FIG. 12B is a processing flowchart of a receptacle transferring method in warehousing scheduling according to an embodiment of the present disclosure;
FIG. 12C is a processing flowchart of a warehousing scheduling method according to an embodiment of the present disclosure;
FIG. 13 is a flowchart of a warehousing scheduling method according to an embodiment of the present disclosure;
FIG. 14A is a schematic diagram of an execution process of an intra-lane receptacle transport task according to an embodiment of the present disclosure;
FIG. 14B is a schematic diagram of an execution process of an intra-lane receptacle replacement task according to an embodiment of the present disclosure;
FIG. 14C is a schematic diagram of an execution process of a cross-lane receptacle transport task according to an embodiment of the present disclosure;
FIG. 14D is a schematic diagram of an execution process of a cross-lane receptacle replacement task according to an embodiment of the present disclosure;
FIG. 15 is a schematic structural diagram of a warehousing scheduling device according to an embodiment of the present disclosure; and
FIG. 16 is a structural block diagram of a computing device according to an embodiment of the present disclosure.

### DETAILED DESCRIPTION

Various exemplary embodiments of the present disclosure are described herein in detail with reference to the accompanying drawings. It should be noted that unless otherwise specified, the relative deployment, the numerical expression, and values of the components and steps described in the embodiments do not limit the scope of the present disclosure.

In fact, the following descriptions of at least one exemplary embodiment are merely illustrative, and in no way constitute any limitation on the present disclosure and application or use of the present disclosure.

Technologies, methods, and devices known to a person of ordinary skill in the art may not be discussed in detail, but in proper circumstances, the technologies, methods, and devices shall be regarded as a part of the specification.

In all examples that are shown and discussed herein, any specific value should be interpreted only as an example and not as a constraint. Therefore, other examples of the exemplary embodiments may have different values.

It should be noted that: similar reference signs or letters in the accompanying drawings indicate similar items. Therefore, once an item is defined in one accompanying drawing, the item does not need to be further discussed in the subsequent accompanying drawings.

The terms used in one or more embodiments of the present disclosure are merely configured to describe the embodiments but are not intended to limit one or more embodiments of the present disclosure. The terms "a", "said" and "the" of singular forms used in one or more embodiments and the appended claims of the present disclosure are also intended to include plural forms, unless otherwise specified in the context clearly. It should further be understood that the term "and/or" used in one or more embodiments of the present disclosure indicates and includes any or all possible combinations of one or more associated listed items.

It should be understood that although the terms such as first, and second may be configured to describe various information in one or more embodiments of the present disclosure, but such information should not be limited to these terms. These terms are merely configured to distinguish between information of the same type. For example, without departing from the scope of one or more embodiments of the present disclosure, the first may also be referred to as the second. Similarly, the second may also be referred to as the first. Depending on the context, the term "if" as used herein may be interpreted as "when..." or "upon..." or "in response to determining."

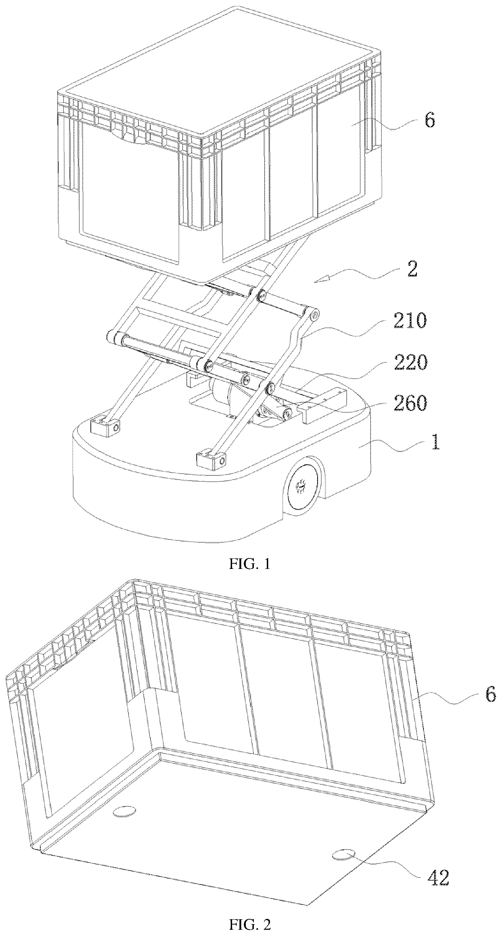

The present disclosure provides a transfer robot, as shown in FIG. 1 to FIG. 6, including a chassis mechanism 1, a lifting mechanism 2, and a top plate 3. The lifting mechanism 2 is arranged above the chassis mechanism 1, the top plate 3 is arranged at a top portion of the lifting mechanism 2, and the top plate 3 is driven by the lifting mechanism 2 to rise or fall. The top plate 3 is configured to carry a receptacle 6, and the top plate 3 is configured to raise or lower the receptacle 6. A positioning mechanism 4 configured to be fitted with a bottom portion of the receptacle 6 is arranged on a surface of the top plate 3 for contact with the receptacle 6, to accurately position a location of the receptacle 6.

The positioning mechanism 4 includes a positioning pin 41 or a positioning hole 42 fitted with each other. In an embodiment, the positioning pin 41 is arranged on the top plate 3, and the positioning hole 42 configured to be fitted with the positioning pin 41 is arranged in the bottom portion of the receptacle 6. In another embodiment, the positioning hole 42 is arranged in the top plate 3, and the positioning pin 41 configured to be fitted with the positioning hole 42 is arranged at the bottom portion of the receptacle 6.

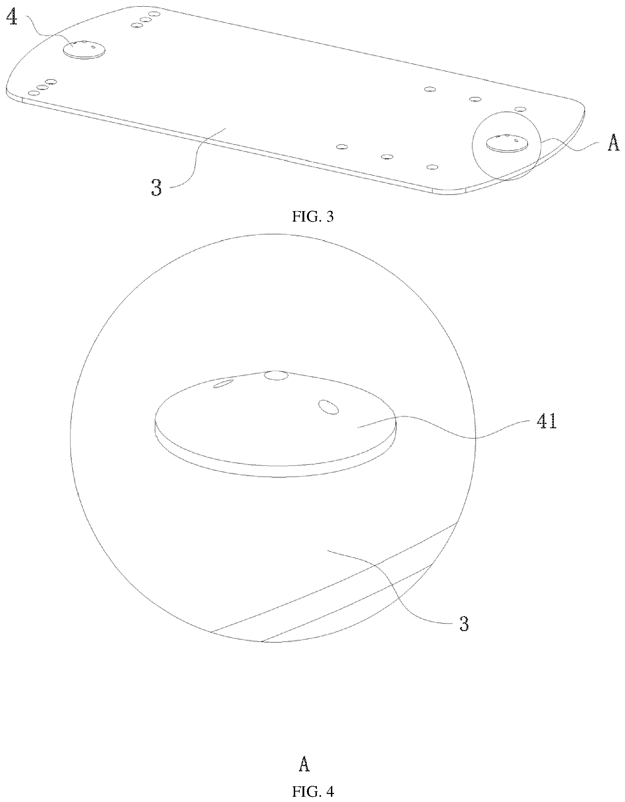

One positioning pin 41 or one fixed hole 42 may be respectively arranged, or at least two positioning pins 41 or at least two fixed holes 42 may be respectively arranged. In this embodiment, as shown in FIG. 2 and FIG. 3, two positioning pins 41 and two positioning holes 42 are respectively arranged, and are distributed in regions on two opposite sides of the top plate 3 or the receptacle 6. The positioning pin 41 may be a protrusion protruding from a surface of the top plate 3 or the receptacle 6, and may be specifically a flat cylindrical, conical, or spherical structure, or the like. A shape of the positioning hole 42 matches with a shape of the positioning pin 41. At least a top surface of the positioning pin 41 is of a conical surface structure, to enable the positioning pin 41 to smoothly enter the positioning hole 42. FIG. 4 shows a specific structure of the positioning pin 41, which is arranged into a flat cylinder shape, and an end of the positioning pin 41 away from the connected top plate 3 or receptacle 6 is set into a conical structure.

The positioning pin 41 may be connected to a surface of the top plate 3 or the receptacle 6 in a non-detachable fixed connection manner, for example, a connection manner such as integrated molding, welding, or bonding, or a detachable fixed connection manner such as threaded connection or snap connection. The positioning pin 41 may also be set to an elastic telescopic structure, extending from a bottom surface of the top plate 3 or the receptacle 6 in a free state, and retracting into the top plate 3 or the receptacle 6 when being subjected to an external force.

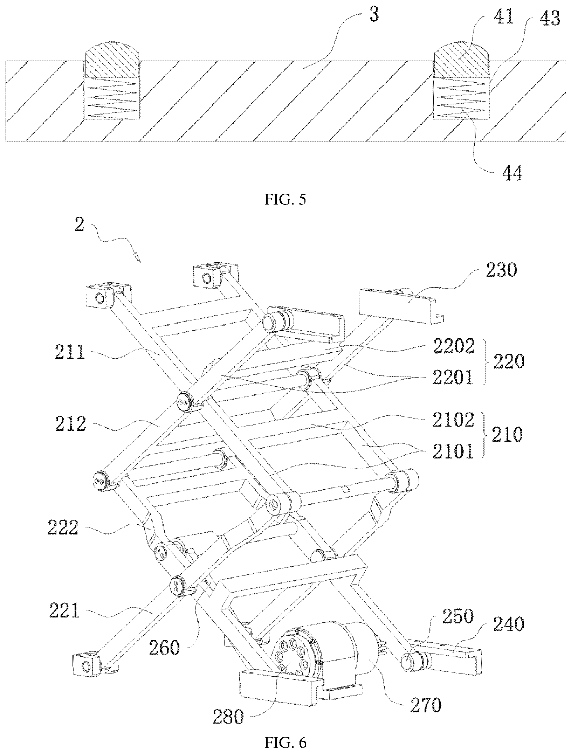

In an embodiment in which the positioning pin 41 is an elastic telescopic structure, as shown in FIG. 5, a mounting hole 43 is provided on a surface of the top plate 3 or the receptacle 6, an elastic member 44 is arranged in the mounting hole 43, and the positioning pin 41 is connected to the elastic member 44. The positioning pin 41 can compress the elastic member 44 and retract into the mounting hole 43 under the action of an external force. When the elastic positioning pin 41 is arranged on the top plate 3, the top plate 3 may be configured to transport an ordinary receptacle. When the ordinary receptacle is placed on the top plate 3, the positioning pin 41 can be pressed back into the mounting hole 43, so that the ordinary receptacle can be placed stably. When the elastic positioning pin 41 is arranged at the bottom portion of the receptacle 6, the receptacle 6 can be placed stably on a smooth plane, and the positioning pin 41 retracts into the mounting hole 43 under the pressure of the plane.

The chassis mechanism 1 includes a travel assembly. The travel assembly may travel along a specific track or be controlled by a control system. The travel assembly may receive instructions and travel according to a specified route, and transport the receptacle 6 at a specified location to another specified location. Sensors may be arranged on the chassis mechanism 1. The sensors include a variety of sensors, for example, a visual sensor, a laser ranging sensor, an infrared sensor, and a laser sensor, so that the chassis mechanism 1 can detect its own location, as well as locations of other target objects such as the shelf, the receptacle 6, and an obstacle, and send location signals to an intelligent control system. The transfer robot may be equipped with a navigation system, and can plan a traveling route according to its own location, an actual location of a target object, and a specified location of the target object.

The lifting mechanism 2 may be a scissor-type lifting mechanism, a linear driver, or the like. As shown in FIG. 6, in an embodiment in which the lifting mechanism 2 is a scissor-type lifting mechanism, the lifting mechanism 2 includes a drive assembly and a scissor assembly including at least one scissor unit. A bottom end of the scissor assembly is movably connected to the chassis mechanism 1, a top end of the scissor assembly is movably connected to the top plate 3, and the drive assembly is configured to drive the scissor assembly to rise or fall in a vertical direction. The drive assembly may be controlled by the control system. There are at least two scissor units, arranged in a longitudinal direction. A quantity of the scissor units may be selected according to requirements of a lifting height. The more the scissor units, the higher the lifting height of the scissor units.

The scissor unit includes two, a first connecting rod component 210 and a second connecting rod component 220, arranged in an intersecting manner and hinged to each other at an intersection. The scissor unit located uppermost is adjacent to the top plate 3. A top end of the first connecting rod component 210 of the scissor unit is hinged to the top plate 3, and the second connecting rod component 220 can move in a horizontal direction relative to the top plate 3. The scissor unit located lowermost is adjacent to the chassis mechanism 1. A bottom end of the first connecting rod component 210 of the scissor unit is hinged to the chassis mechanism 1, and the second connecting rod component 220 can move in the horizontal direction relative to the chassis mechanism 1. Any two adjacent scissor units are hinged to each other. When the scissor assembly includes only one scissor unit, the scissor unit located uppermost and adjacent to the top plate 3 and the scissor unit located lowermost and adjacent to the chassis mechanism 1 are a same scissor unit.

When the scissor unit rises, a top end of the second connecting rod component 220 gradually moves toward the top end of the first connecting rod component 210, and a bottom end of the second connecting rod component 220 gradually moves toward the bottom end of the first connecting rod component 210. When the scissor unit falls, the top end of the second connecting rod component 220 gradually moves away from the top end of the first connecting rod component 210, and the bottom end of the second connecting rod component 220 gradually moves away from the bottom end of the first connecting rod component 210. When the scissor assembly rises or falls, a first connecting rod 2101 and a second connecting rod 2201 of each scissor unit simultaneously rotate relative to each other, and top end heights of the first connecting rod 2101 and the second connecting rod 2201 can increase or decrease synchronously, so that the top plate 3 can be stably raised or lowered.

The first connecting rod component 210 includes two first connecting rods 2101 arranged in parallel and a first cross beam 2102 connected between the two first connecting rods 2101. The second connecting rod component 220 includes two second connecting rods 2201 that are parallel to each other, and a second cross beam 2202 connected between the two second connecting rods 2201. In two scissor units adjacent to each other up and down, two, upper and lower first connecting rods 2101 located on a same side are hinged to each other, and two, upper and lower second connecting rods 2201 located on a same side are hinged to each other. In the scissor unit adjacent to top plate 3, both upper ends of two first connecting rods 2101 are hinged to the top plate 3, and both upper ends of two second connecting rods 2201 can move in the horizontal direction relative to the top plate 3. In the scissor unit adjacent to chassis mechanism 1, both lower ends of two first connecting rods 2101 are hinged to the chassis mechanism 1, and both lower ends of two second connecting rods 2201 can move in the horizontal direction relative to the chassis mechanism 1.

A first guide mechanism 230 extending along the horizontal direction is arranged at a bottom portion of the top plate 3, and the second connecting rod component 220 in the scissor unit adjacent to the top plate 3 is configured to move horizontally in the first guide mechanism 230. A second guide mechanism 240 extending along the horizontal direction is arranged at a top portion of the chassis mechanism 1, and the second connecting rod component 220 adjacent to the chassis mechanism 1 is configured to move along the horizontal direction in the second guide mechanism 240. The two second connecting rod assemblies 220 move along the first guide mechanism 230 and the second guide mechanism 240 respectively in the horizontal direction relative to the top plate and chassis mechanism 1, so that the lifting stability of the scissor assembly thereof is ensured. A roller 250 is arranged at an end head of the second connecting rod component 2201 that is in the scissor unit and that is configured to be fitted with the first guide mechanism 230 or the second guide mechanism 240, and the roller 250 is configured to roll along the first guide mechanism 230 or the second guide mechanism 240. Friction between the roller 250 and the first guide mechanism 230 or the second guide mechanism 240 is small, which can reduce wear.

Specifically, two first guide mechanisms 230 are arranged and respectively correspond to the two second connecting rods 2201 of the second connecting rod component 220 adjacent to the top plate 3. Two second guide mechanisms 240 are also arranged and respectively correspond to the two second connecting rods 2201 of the second connecting rod component 220 adjacent to the chassis mechanism 1. Rollers 250 rolling along the first guide mechanism 230 are arranged at both end heads of the two second connecting rods 2201 of the second connecting rod component 220 adjacent to the top plate 3, and rollers 250 rolling along the second guide mechanism 240 are arranged at both end heads of the two second connecting rods 2201 of the second connecting rod component 220 adjacent to the chassis mechanism 1. The first guide mechanism 230 and the second guide mechanism 240 may be made of angle steel. One side edge of the angle steel is fixedly connected to a surface of the top plate 3 or the chassis mechanism 1, and forms guide groove structures with the surfaces of the top plate 3 or the chassis mechanism 1 respectively in an enclosing manner. The roller 250 rolls in the guide groove formed by the angle steel on the surface of the top plate 3 or the chassis mechanism 1.

In this embodiment, a specific embodiment of the scissor assembly is described below in detail.

In this embodiment, as shown in FIG. 6, the scissor assembly includes two scissor units. A first connecting rod component 210 of the scissor unit located above is a first upper connecting rod component 211, and a second connecting rod component 220 thereof is a second upper connecting rod component 212. A first connecting rod component 210 of the scissor unit located below is a first lower connecting rod component 221, and a second connecting rod component 220 thereof is a second lower connecting rod component 222.

Hinge seats are arranged both at the bottom portion of the top plate 3 and on the chassis mechanism 1. A top end of the first upper connecting rod component 211 is hinged to the hinge seat at the bottom portion of the top plate 3. A bottom end of the first upper connecting rod component 211 is hinged to a top end of the first lower connecting rod component 221. A bottom end of the first lower connecting rod component 221 is hinged to the hinge seat on the chassis mechanism 1. A top end of the second upper connecting rod component 212 is supported at the bottom portion of the top plate 3 and moves in the horizontal direction relative to the top plate 3. A bottom end of the second upper connecting rod component 212 is hinged to a top end of the second lower connecting rod component 222. A bottom end of the second lower connecting rod component 222 is supported at the chassis mechanism 1 and moves in the horizontal direction relative to the chassis mechanism 1.

A first guide mechanism 230 is arranged at the bottom portion of the top plate 3, and a roller 250 traveling in the first guide mechanism 230 is arranged at the top end of the second upper connecting rod component 212. A second guide mechanism 240 is arranged on the chassis mechanism 1, and a roller 250 traveling in the second guide mechanism 240 is arranged at the bottom end of the second lower connecting rod component 222.

The drive assembly includes a rocker 260, a drive motor 270, and a cam 280 connected to an output end of the drive motor 270. One end of the rocker 260 is hinged to the cam 280, and the other end thereof is hinged to the scissor assembly. The drive motor 270 is fixed on the chassis mechanism 1, and is configured to drive the scissor assembly to rise or fall through the rocker 260. When working, the drive motor 270 drives the cam 280 to rotate. An end of the rocker 260 hinged to the cam 280 rotates around the cam 280 as driven by the cam 280. The other end of the rocker 260 drives the first connecting rod 2101 and the second connecting rod 2201 of the scissor assembly to rotate relative to each other, to drive the scissor assembly to rise or fall.

The drive assembly may also be a driver such as a linear motor or a hydraulic cylinder. In an embodiment, one end of the driver is hinged to the top plate 3 or the chassis mechanism 1, and the other end is hinged to the scissor assembly. In another embodiment, two ends of the driver are both hinged to the scissor assembly. In this embodiment, the two ends of the driver may be hinged to different scissor units, or the two ends of the driver may be hinged respectively to the first connecting rod 2101 and the second connecting rod 2201 of the same scissor unit.

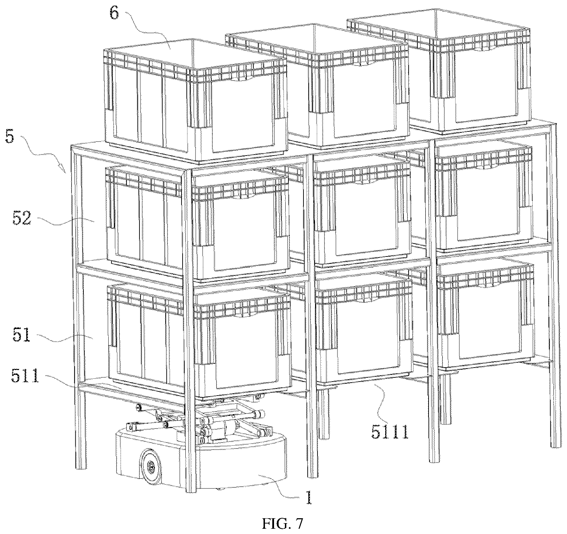

The present disclosure also provides a receptacle transfer system. As shown in FIG. 7, the receptacle transfer system includes the foregoing transfer robot and a shelf 5. The transfer robot is configured to raise a receptacle 6 located on the shelf 5 or is configured to place a receptacle 6 on a top plate onto 3 the shelf 5.

The shelf 5 includes a shelf body. The shelf body includes a plurality of first receptacle berths 51 arranged in a row, the first receptacle berth 51 is configured for placing the receptacle 6, the plurality of first receptacle berths 51 are located at a bottom layer of the shelf 5, and the first receptacle berth 51 includes a support portion 511 configured to support the receptacle 6. The support portion 511 has an open end 5111 for a transfer mechanism of the receptacle 6 to pass, and a height allowing the transfer robot to pass is reserved between the first receptacle berth 51 and a bottom end of the shelf body. The support portion 511 may be a support beam of a U-shaped structure, forming one open end 5111, or may be two support beams only supported on opposite sides of the receptacle 6, forming two opposite open ends 5111.

A plurality of second receptacle berths 52 may be further arranged on the shelf body, and the plurality of second receptacle berths 52 are arranged in a row above the first receptacle berths 51, and may be arranged as a plurality of layers above the first receptacle berths 51. The receptacle transfer system further includes a transport robot. The transport robot is configured to transport the receptacle 6 at the second receptacle berth 52 to the first receptacle berth 51.

The transport robot may be an existing technology. In this embodiment, a transport robot is provided, and its specific structure and working principle are described. The transport robot includes a lifting mechanism and a receptacle pickup and return mechanism. The lifting mechanism is configured to drive the receptacle pickup and return mechanism to move up and down. The receptacle pickup and return mechanism includes a base plate and two telescopic arms. The two telescopic arms are configured to be capable of hooking or pushing the receptacle 6. After extending, the two telescopic arms can hook the receptacle 6 located at the second receptacle berth 52 to the base plate, then the lifting mechanism lowers the receptacle 6 to a height of the first receptacle berth 51, and then, the receptacle 6 is pushed to the first receptacle berth 51 through the two telescopic arms. The transport robot may alternatively be configured to transfer the receptacle 6 located at the first receptacle berth 51 to the second receptacle berth 52.

A command of picking up a receptacle is sent to the transfer robot. After receiving the command, the transfer robot lowers the top plate 3 through the lifting mechanism 2 to be lower than the first receptacle berth 51. Then, the transfer robot travels, through the chassis mechanism 1, to below the first receptacle berth 51 of the shelf 5 on which the designated receptacle 6 is located, and then uses the lifting mechanism 2 to raise the top plate 3 from the open end 5111 of the support portion 511 of the first receptacle berth 51 to lift the receptacle 6, and at the same time, the positioning mechanism 4 can accurately position the receptacle 6. After lifting the receptacle 6, the transfer robot leaves from the open end 5111 of the support portion 511, to take the receptacle 6 away. After the receptacle 6 at the first receptacle berth 51 is taken away, the transport robot may move the receptacle 6 at the second receptacle berth 52 to the first receptacle berth 51.

A command of returning a receptacle is sent to the transfer robot. After receiving the command, the transfer robot raises the receptacle 6 on the top plate 3 through the lifting mechanism 2, to make the receptacle 6 higher than the support portion 511 of the first receptacle berth 51 of the shelf 5. Then, the transfer robot travels to the open end 5111 of the designated first receptacle berth 51 through the chassis mechanism 1, then lowers the receptacle 6 through the lifting mechanism 2, and places the receptacle 6 on the support portion 511 of the designated first receptacle berth 51. The transport robot can transfer the receptacle 6 placed at the first receptacle berth 51 to the second receptacle berth 52.

The receptacle transfer system achieves that the transfer robot picks up and places the receptacle 6 on the shelf 5 by itself, which saves labor. In addition, the location of the receptacle can be accurately positioned through the positioning mechanism, which improves the accuracy of the location of the receptacle and the stability. The transfer robot can not only transport the receptacle, but also pick up and place the receptacle by itself, which achieves automated operation of the entire procedure.

In a conventional warehousing system, a transport robot completes automated picking in a form of taking out a receptacle from a warehouse, conveying the receptacle directly to a workstation, and returning the receptacle to the warehouse after picking is completed. In this mode, in either a form of using a conveyor line as the workstation or a form of completing picking directly on the robot, the same robot completes all actions. The transport robot itself is tall and runs slowly. In addition, the costs are high, which inevitably causes defects such as low efficiency and low cost performance. To overcome the defects, a series of optimized solutions have emerged in the industry. For example, a third-party device is configured to quickly remove and replenish a receptacle on the robot, thereby shortening a wait time for handover and improving the utilization of robots. However, such solutions do not change using the transport robot to complete a full series of actions such as receptacle pickup-receptacle conveying-picking-receptacle returning, and the foregoing defects still exist. In addition, rigidity is also introduced to the overall solution, which is not conducive to on-site construction and later modifications.

However, in the embodiments of the present disclosure, handover of a receptacle between a first receptacle berth and a second receptacle berth is implemented through a transport robot, and circulation of a receptacle between a first receptacle berth and a workstation is completed through a transfer robot. The transfer robot may pick up one receptacle or two receptacles. The transfer robot is better than the transport robot in terms of all of the overall height, the running speed, and the costs, so that the working efficiency of the warehousing system can be greatly improved.

In an embodiment, FIG. 7 shows a schematic structural diagram of one layer of first receptacle berth 51 and three layers of second receptacle berths 52. The first receptacle berth 51 is located at a location below the second receptacle berth 52, which makes it easier for the transfer robot to transfer the receptacle located at the first receptacle berth 51.

In an embodiment, two, three, or more layers of first receptacle berths 51 may alternatively be arranged. A plurality of layers of first receptacle berths 51 are located below the second receptacle berth 52. For example, the shelf starts from a bottom portion, the first layer thereof is a first receptacle berth, the second layer thereof is a first receptacle berth, the third layer thereof is a second receptacle berth, and the fourth layer thereof is a second receptacle berth. When performing transfer, the transfer robot may first transfer a receptacle at a first receptacle berth 51 located at a lowest layer, then transfer a receptacle at a first receptacle berth 51 located on an upper layer according to actual conditions, and then complete transfer at first receptacle berths 51 on different layers in turn.

In an embodiment, the first receptacle berth 51 and the second receptacle berth 52 are arranged sequentially alternately in a vertical direction of the shelf. For example, the lowest layer of the shelf may be a first receptacle berth 51, a second receptacle berth 52 is above the first receptacle berth 51, optionally, another first receptacle berth 51 is above the second receptacle berth 52, and so on. Alternatively, the lowest layer of the shelf may be a first receptacle berth 51, the second to n^{th} layers are second receptacle berths 52, the (n+1)^{th} layer is a first receptacle berth, the (n+2)^{th} to 2n^{th} layers are second receptacle berths. Alternatively, the lowest layer is a second receptacle berth 52, a first receptacle berth 51 is above the second receptacle berth 52, and optionally, another second receptacle berth 52 is above the first receptacle berth 51. Examples are not provided herein one by one.

In this embodiment, a robot that can perform transfer at a first receptacle berth 51 on an upper layer needs to be selected. The structure of the first receptacle berth 51 may alternatively be redesigned. For example, a conveyor mechanism controlled by a drive mechanism may be selected and used as the first receptacle berth 51. The receptacle located at the first receptacle berth 51 may be conveyed out through the driving of the drive mechanism. In this way, a robot with a simpler structure and a higher running speed may be selected to complete actions of picking up and placing the receptacle at the first receptacle berth 51. Alternatively, a travelable table may be arranged below the first receptacle berth 51, and the transfer robot can travel to the table through a slope to pick up and place the receptacle at the first receptacle berth 51 above the table.

The first receptacle berth 51 of the present disclosure serves as a cache region, and the second receptacle berth 52 serves as a receptacle storage region. The transport robot completes exchange of the receptacle between the cache region and the receptacle storage region. The transfer robot transports the receptacle in the cache region to the workstation, and returns the receptacle to the cache region after picking is completed, and the transport robot continues to complete exchange of the receptacle between the cache region and the receptacle storage region, so that the picking is completed. After the picking is completed, the transfer robot carrying the receptacle may alternatively choose not to convey the receptacle back to the cache region, and instead, convey the receptacle to another location for storage. In the adopted transfer manner, the transport robot and the transfer robot have clear labor division and respectively perform their own duties. In addition, due to the structure and actual working requirements of the transfer robot, a running speed of the transfer robot is generally far higher than a running speed of the transport robot, which greatly improves the picking efficiency of the receptacle.

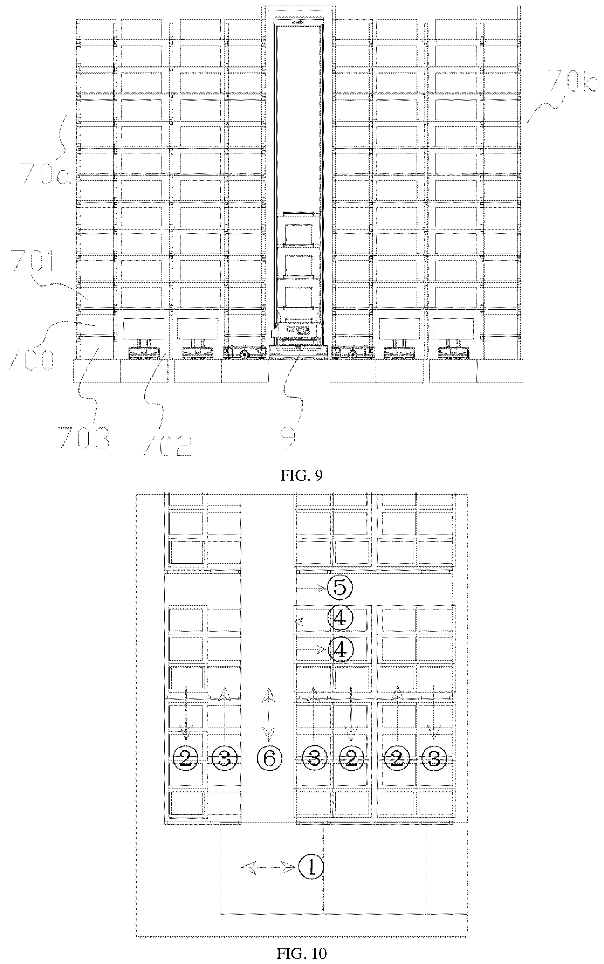

FIG. 10 illustrates a warehousing system of the present disclosure. The warehousing system includes a warehouse storage area 7, a high-speed travel area 73, and a workstation area 8.

Specifically, in the warehouse storage area 7, a plurality of shelves 70 are arranged in a matrix, and the shelf 70 may be the shelf structure in the foregoing embodiment. The plurality of shelves 70 are arranged together. Transverse channels 71 are formed between a plurality of transversely arranged shelves 70 in the warehouse storage area 7. Longitudinal channels 72 are formed between a plurality of longitudinally arranged shelves 70 in the warehouse storage area 7. The transverse channels 71 and the longitudinal channels 72 intersect together to form space for the transfer robot and the transport robot to travel. Based on this, traveling routes may be properly arranged for the transfer robot and the transport robot. For example, in view of different task allocations of the transfer robot and the transport robot, the transport robot may be configured to pass only the longitudinal channels 72, and the transfer robot may be configured to pass only the transverse channels 71.

In some embodiments, the longitudinal channel 72 may be a one-way channel, and the transverse channel 71 may be a two-way channel. This is because the longitudinal channels 72 are only allocated to the transport robot for use, and the transverse channels may be allocated to the transfer robot for use. Because in the warehousing system, a plurality of transfer robots are arranged, and the plurality of transfer robots need to constantly shuttle in the warehouse storage area 7 and the workstation area 8, the transverse channel is arranged as a two-way channel. In this way, the plurality of transfer robots can travel simultaneously in both directions in the transverse channel, which is beneficial to improving the transfer speed of the transfer robot and preventing the transfer robots from giving way to each other.

In some embodiments, the transverse channel 71 may alternatively be allocated to both the transport robot and the transfer robot for use. This allows the transport robot to work in different longitudinal channels 72 with the help of the transverse channel 71, so that the transport robot can be responsible for exchange of receptacles on a plurality of rows of shelves between the cache region and the receptacle storage region. When there is a path conflict between a transport robot and a transfer robot in a transverse channel 71, the transport robot or the transfer robot may be selected according to a prefabricated processing policy to give way.

To plan more accessible paths for transfer robots in the warehouse storage area 7, in an embodiment, the cache region not only includes a receptacle cache berth (first receptacle berth), but also includes a cache region channel for the transfer robots to travel.

FIG. 9 shows a schematic diagram of this structure. In the partial warehousing storage area 7 shown in FIG. 9, the structure includes a first shelf 70a and a second shelf 70b. Structures of the first shelf 70a and the second shelf 70b may be consistent. A bottom layer of the first shelf 70a is a cache region, and an upper layer of the cache region is a receptacle storage region. The cache region includes a first receptacle cache berth 700 (which may also be understood as the foregoing first receptacle berth) and a cache region channel 702. The cache region channel 702 can run through the entire first shelf 70a, so that a transfer robot can pass through the cache region channel 702 to pick up or place a receptacle at a first receptacle cache berth 700 at a location adjacent to the cache region channel 702. For example, the transfer robot may also pass through the cache region channel 702 to a location of another shelf or travel to another transverse channel or the like. Choosing to make the transfer robot to perform an operation on the receptacle at the first receptacle cache berth 700 in the cache region channel 702 can prevent the transfer robot from occupying the transverse channel for a long time, improve the smoothness of the transverse channel, and prevent a plurality of transfer robots from causing congestion in the transverse channel.

In another embodiment, the cache region channel 702 may also be used as a channel for a fully-loaded transfer robot, that is, mainly for the transfer robot to pass after transfer robot obtains the receptacle. This is because after the receptacle is located on the transfer robot, the overall height of the transfer robot increases, so the transfer robot needs to pass the cache region channel 702. In this case, an unloaded transfer robot may pass directly below the first receptacle cache berth 700. After traveling to an appropriate receptacle berth, the transfer robot picks up a receptacle from a corresponding first receptacle berth and turns to the cache region channel 702 for passage.

In an embodiment, an unloaded transfer robot may alternatively pass through the cache region channel 702, depending on a specific actual requirement and path planning, and details are not described herein.

In the first shelf 70a shown in FIG. 9, two longitudinally extending first receptacle cache berths 700 and two longitudinally arranged cache region channels 702 are arranged at a bottom layer. Each cache region channel 702 corresponds to its own first receptacle cache berth 700. The two cache region channels 702 are arranged in the middle of the first shelf 70a, and the two longitudinally arranged first receptacle cache berths 700 are arranged on outer sides of the first shelf 70a. Certainly, for a person skilled in the art, a quantity of first receptacle cache berths and a quantity of cache region channels 702 on the first shelf 70a are not limited, and may be more or fewer, and details are not described herein.

In the first shelf 70a, the first receptacle storage berth 701 (which may also be understood as the foregoing second receptacle berth) serving as a receptacle storage region is arranged above the first receptacle cache berth 700. In the embodiment shown in FIG. 9, a longitudinal channel 72 for a transport robot 9 to pass is formed between the first shelf 70a and the second shelf 70b. The transport robot 9 may implement exchange of a receptacle between the first receptacle cache berth 700 and the first receptacle storage berth 701 through a lifting assembly and a receptacle pickup and return assembly thereof, that is, transfer a receptacle located at the first receptacle storage berth 701 to the first receptacle cache berth 700, or transfer a receptacle located at first receptacle cache berth 700 to the first receptacle storage berth 701.

It should be noted that a shelf may include only one longitudinally extending first receptacle cache berth 700 and one longitudinally arranged cache region channel 702. That is, the shelf may include only a half of the first shelf 70a shown in FIG. 9. Such a shelf may be placed when space is not enough for placing the first shelf 70a shown in FIG. 9 or be placed when required in another scenario, to further increase the storage rate of the warehouse.

In an embodiment, the transport robot 9 can implement exchange of a receptacle between a receptacle storage region and a cache region of a same shelf. Alternatively, a plurality of shelves share a receptacle storage region and a cache region. That is, the transport robot 9 may transfer a receptacle on a receptacle storage region of one shelf to a cache region of another shelf, or transfer a receptacle on a cache region of one shelf to a receptacle storage region of another shelf.

The transport robot is responsible for transferring a receptacle between regions, for example, is responsible for transferring receptacles between a receptacle storage region and a cache region to overall deploy distribution of the receptacles in different regions, for transferring receptacles between different locations in a same region, for example, between different receptacle cache berths in a cache region, or between different receptacle storage berths in a receptacle storage region, to overall deploy distribution of the receptacles at different locations in a same region.

The transport robot is configured to complete exchange of receptacles between a picking cache region and the receptacle storage region, to deploy distribution of the receptacles in different regions. Allocation of each receptacle in different regions may depend on a plurality of factors. In an embodiment, it may depend on four factors: whether the receptacle is hit by a task, an algorithm score of the receptacle, storage limitations of different regions, and properness of intra-region or inter-region distribution and the like.

In an embodiment, the transport robot is configured to perform exchange of the receptacles between the picking cache region and the receptacle storage region based on task allocation. When a receptacle is hit by a task, that is, after the system allocates a picking task to the receptacle, a current state of the receptacle determines its subsequent operation.

That is, if the receptacle is currently already located in the cache region (the first receptacle berth or the receptacle cache berth), the transfer robot directly transports the receptacle to a destination pointed by the task. If the receptacle is currently located in the receptacle storage region (the second receptacle berth or the receptacle storage berth), the transport robot transfers the receptacle to the cache region, and then the transfer robot transports the receptacle to a destination pointed by the task.

In an embodiment, each receptacle is scored according to a cargo placed inside the receptacle, and if a probability of outbound delivery of the cargo placed inside the receptacle is high, the score of the cargo is high. Weighted summation is made on scores of all cargoes in one receptacle to obtain a total score of the receptacle.

For a score of a receptacle, many factors may be taken into account. In this embodiment, types of cargoes placed inside the receptacle may be taken into account. Some cargoes have higher score ratios, while some cargoes have lower scores, scores of corresponding cargoes are pre-stored in the system. If scores of cargoes placed in a receptacle are high, a score of the receptacle is also high.

A score of a cargo may also be calculated according to a probability of outbound delivery of the cargo. For example, the probability of outbound delivery of the cargo within a predetermined time may be counted. If a specific cargo has a large quantity of times of outbound delivery within the predetermined time, a score of the cargo is high; otherwise, it is low. For example, quantities of times of outbound delivery of all cargoes in a month are counted, and probabilities of outbound delivery of the cargoes in a month are calculated and may also be referred to as popularities of the cargoes.

A total score of each receptacle may optionally be normalized into a score of the receptacle. The score of the receptacle changes along with changes of two aspects, i.e. an inventory or an expectation of an outbound delivery quantity. The score of the receptacle is not constant. Instead, the score of the receptacle is calculated periodically or is calculated and updated as triggered by an inventory change event.

When receptacles are allocated, receptacles with lower scores intend to be placed in the receptacle storage region, and receptacles with higher scores intend to be placed in the cache region. This relatively reduces a quantity of operations performed by the transport robot and improves the efficiency of picking.

When the score of the receptacle changes, which makes the score of the receptacle not match a region in which the receptacle is located, adjustment of the location of the receptacle is triggered. That is, the transport robot transfers, based on scores of receptacles, a receptacle with a high score from the receptacle storage region to the cache region, or a receptacle with a low score from the cache region to the receptacle storage region.

In an embodiment, the transport robot is configured to complete transferring of receptacles between the cache region and the receptacle storage region based on a storage proportion of the receptacle storage region or the cache region.

When storage in a specific region exceeds a set threshold, the adjustment of receptacles is triggered. For example, when storage of receptacles in the cache region exceeds a specific proportion, some receptacles need to be transferred from the cache region to the receptacle storage region, and/or when storage of receptacles in the cache region is lower than a specific proportion, some receptacles need to be transferred from the receptacle storage region to the cache region. A transferring rule is adjusting, with reference to scores and hits of receptacles, receptacles with lower scores or no hit back to the receptacle storage region first. Conversely, if storage of receptacles in the receptacle storage region exceeds a set threshold, some receptacles need to be adjusted from the receptacle storage region to the cache region. A transferring rule is similar, and is adjusting receptacles with higher scores or that have been hit to the cache region first.

In some embodiments, different intra-region or inter-region distributions of receptacles affect the pick-and-place efficiency of robots. When robots performing pick-and-place are too concentrated or dispersed due to an improper distribution, adjustment of locations of receptacles may be triggered to adjust properness of paths and concentrations of robots performing transportation in different regions.

In some embodiments, the cache region channel 702 may extend along a longitudinal direction of the shelf, to form a longitudinal cache region channel, or may extend along a transverse direction of the shelf, to form a transverse cache region channel. The longitudinal cache region channel and the transverse cache region channel are distributed in different shelves, which allows a transfer robot to shuttle in the warehouse storage area through the transverse cache region channel and the longitudinal cache region channel, which is beneficial to the path planning of the transfer robot and improves efficiency of the warehousing system.

Correspondingly, in some embodiments, an arrangement direction of first receptacle cache berths adjacent to the cache region channel 702 may be longitudinal or transverse. A transfer robot needs to travel to below the first receptacle cache berth to perform a pick-and-place operation. Therefore, an unloaded travel channel 703 for a transfer robot in an unloaded state to pass is formed between bottom portions of first receptacle cache berths arranged together and the ground. The unloaded travel channel 703 may extend longitudinally or transversely, which is related to an arrangement manner of the first receptacle cache berths. An unloaded transfer robot may travel in a longitudinal direction along bottom portions of longitudinally arranged first receptacle cache berths, or in a transverse direction along bottom portions of transversely arranged first receptacle cache berths, which enriches path planning of the robot and improves efficiency of receptacle circulation.

In the embodiment shown in FIG. 10:
① refers to a transverse channel (indicated by a sign 71 above) for a transfer robot and is configured for a transfer robot to switch between different channels. According to actual situations, the transverse channel may be a one-way channel or a two-way channel, and can be passed by the transfer robot in either a fully-loaded state or an unloaded state.
② refers to a longitudinal cache region channel 702 for a fully-loaded transfer robot and configured for a transfer robot carrying a receptacle to pass. An unloaded transfer robot may also pass through the channel.
③ refers to a longitudinal channel (the unloaded travel channel 703) for an unloaded transfer robot, and can be configured for only an unloaded transfer robot to pass. The first receptacle cache berth is above the channel.
④ refers to a transverse channel (the unloaded travel channel 703) for an unloaded transfer robot, and can be configured for only an unloaded transfer robot to pass. The channel passes through the first receptacle cache berth. The transverse channel for an unloaded transfer robot may be formed on a single shelf or may be formed from a plurality of shelves arranged together.
⑤ refers to a transverse channel (indicated by a sign 71 above) for a transfer robot and can be configured for fully-loaded and unloaded transfer robots to pass. There is no first receptacle cache berth above the channel.
⑥ refers to a longitudinal channel (indicated by a sign 72 above) for a transport robot and is configured for a transport robot to pass at a different location in a same lane. According to actual situations, the channel may be two-way or one-way.

The foregoing channels may be used individually or in combination. For example, there are not only a longitudinal channel ③ for an unloaded transfer robot, but also a transverse channel (4) for an unloaded transfer robot and the like in one or more shelves.

A high-speed travel area 73 is arranged between the warehouse storage area 7 and the workstation area 8. A travel speed of a transfer robot in the high-speed travel area 73 is greater than a running speed thereof in the warehouse storage area. This allows the transfer robot to quickly pass the high-speed travel area and complete circulation between the warehouse storage area 7 and the workstation area 8. Certainly, the high-speed travel area 73 is not necessary in the present disclosure. In some application scenarios, no high-speed travel area may be arranged, and details are not described herein.

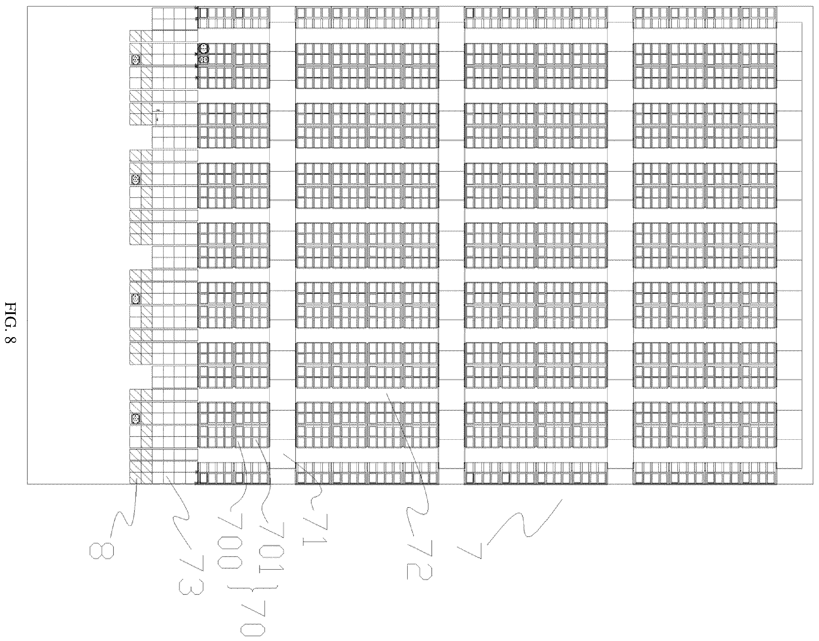

In the warehousing system or transfer system according to this embodiment, the workstation area 8 includes at least one workstation, FIG. 8 illustrates a workstation area including four workstations. After picking up a receptacle from a first receptacle berth, a transfer robot may transfer the receptacle to a corresponding workstation, and perform processing on the receptacle at the workstation. Such processing includes placing items into the receptacle for shelf storage, or taking items out of the receptacle, or another processing step, which is not limited herein.

In an embodiment, a transfer robot may transfer a receptacle at a first receptacle cache berth to a shelf platform at the workstation. In other words, a shelf platform is arranged at a location of the workstation. After moving to the workstation while carrying the receptacle, the transfer robot needs to place the receptacle onto the shelf platform, and then, the workstation performs processing on the receptacle located on the shelf platform. Correspondingly, after the processing on the receptacle is completed, the receptacle is picked up from the shelf platform by the transfer robot and transferred to the first receptacle cache berth, waiting for the transport robot to transfer it to the first receptacle cache berth for storage. The shelf platform in this embodiment may be of a structure the same as or similar to that of the foregoing first receptacle cache berth mentioned provided that the shelf platform can implement docking with the transfer robot.

Use of the foregoing manner enables the transfer robot to quickly place the receptacle onto the shelf platform, or pick up the receptacle from the shelf platform. Therefore, the transfer robot does not need to queue up at the workstation and can move in and out quickly.

The shelf platform may be a one-layer structure or a multi-layer structure. The transfer robot may place receptacles on different layers, or pick up them from different layers.

After conveying the receptacle to the workstation, the transfer robot actively adjusts the receptacle to an appropriate height and an appropriate attitude for operation personnel to perform operation conveniently. Alternatively, the receptacle may be directly picked up manually or through a manipulator from the robot, after being subjected to a specified operation, the receptacle is placed back to the robot, and then, subsequent transportation work is performed.

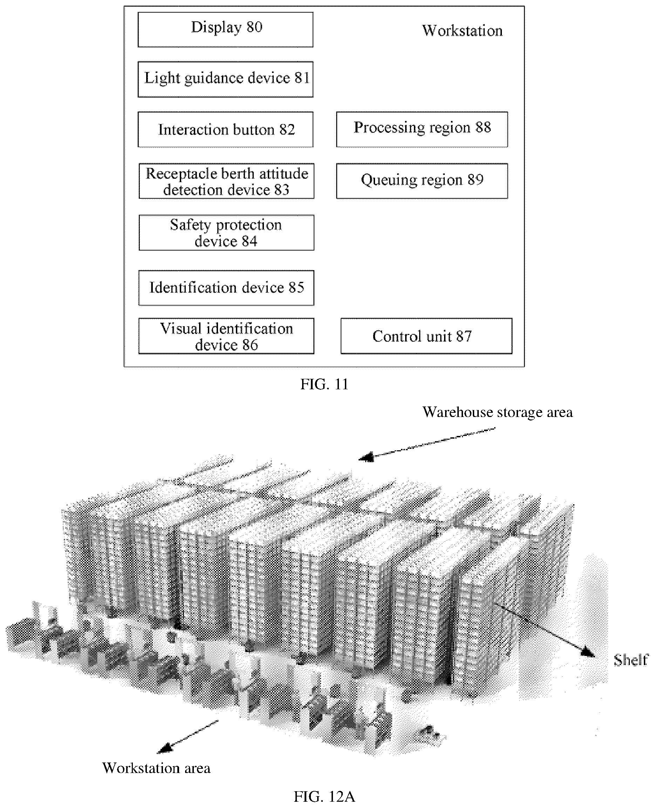

Referring to FIG. 11, in an embodiment, the workstation includes at least one processing region 88. The transfer robot raises the receptacle at the first receptacle cache berth and moves to the processing region 88 of the workstation. Then, the workstation may process the receptacle on the transfer robot located in the processing region 88. In other words, after entering the processing region 88 while carrying the receptacle, the transfer robot does not have the receptacle unloaded. The workstation directly processes the receptacle on the transfer robot. After the processing is completed, the transfer robot conveys the receptacle to the first receptacle cache berth again.

In an embodiment, the workstation is configured to send, to a next transfer robot after the processing on the receptacle on the transfer robot in the processing region 88 is completed, an instruction of picking up a receptacle from the cache region. After receiving the corresponding instruction, the next transfer robot travels to the cache region to pick up the receptacle and travels to the processing region of the workstation for further processing while carrying the receptacle.

In an embodiment, because it takes time for the workstation to perform processing on the receptacle, based on this, the workstation further includes at least one queuing region 89, and the transfer robot is configured to queue sequentially in the queuing region 89 when the processing region is occupied. When a specific transfer robot is being processed in the processing region, if another transfer robot arrives at the station, the another transfer robot needs to sequentially queue in the queuing region 89 to wait. When processing on a receptacle on the transfer robot in the processing region is completed and the transfer robot leaves, the transfer robot located in the queuing region 89 travels to the processing region for processing.

It should be noted that one queuing region 89 may be understood as being provided for one transfer robot to queue, or may be understood as being provided for a plurality of transfer robots to queue, where, in this case, the queuing region 89 corresponds to the processing region 88. For example, when a specific workstation includes two processing regions 88, two queuing regions 89 are arranged correspondingly to respectively correspond to their respective processing regions 88. Specifically, for example, the workstation includes a first processing region and a first queuing region corresponding thereto, as well as a second processing region and a second queuing region corresponding thereto. A transfer robot in the first queuing region may correspondingly move to the first processing region for processing, and a transfer robot in the second queuing region correspondingly moves to the second processing region for processing.

Alternatively, when the workstation includes two processing regions 88 and two queuing regions 89, and a specific processing region 88 is vacant first, transfer robots in the two queuing regions 89 move to the processing region 88 in a sequentially alternating manner for processing, or may be selected according to a chronological order or another predetermined policy. The foregoing manner may also be understood as that different processing regions can share queuing regions.

In an embodiment, the workstation further includes a display 80, configured to guide operation personnel or display information. The display 80 may provide operation personnel with various auxiliary information, for example, information such as a type of picked items and a quantity of picked items, or prompt operation personnel to make corresponding operations and the like.

In an embodiment, the workstation may further include a light guidance device 81, which guides a corresponding operation in a form of light or a projection emitted by the light guidance device 81, and projects information for assisting operation personnel to perform an operation. For example, when operation personnel need to pick an item at a corresponding location into a corresponding receptacle, the light guidance device 81 may emit light onto the corresponding receptacle, or onto the corresponding item, to prompt the operation personnel to make corresponding actions of picking. Alternatively, the light guidance device 81 can project a type and a quantity of goods to a corresponding location, and operation personnel may perform operations based on the information.

In an embodiment, the workstation may possibly include an interaction button 82. The interaction button 82 is configured for confirming interaction with a system after an operation is completed. For example, after completing picking of a corresponding receptacle at the workstation, the operation personnel may press the interaction button 82 to complete interactive confirmation with the system. After performing confirmation, the system may send an operation instruction for a next step of transfer to the transfer robot; and/or send, to a next transfer robot, an operation instruction indicating that the transfer robot can enter the workstation.

In an embodiment, the workstation may possibly further include a receptacle position and attitude detection device 83. The receptacle position and attitude detection device 83 may be a sensor or a detection device such as a camera, configured to detect an attitude of a receptacle on the robot. When a relative location of the receptacle to the robot deviates, the receptacle position and attitude detection device 83 may issue an alarm, to notify operation personnel of placing the receptacle correctly, or place the receptacle correctly through an automation device.

In an embodiment, the workstation may further include a safety protection device 84, configured to protect personal safety of operation personnel during an operation. The safety protection device 84 may be a guardrail or another device that can protect operation personnel, to protect personal safety of the operation personnel during the operation. For example, the guardrail may be configured to prevent a receptacle robot from hitting operation personnel due to an instruction error or another failure.

In this embodiment, the safety protection device 84 may be a protection door configured to prevent the transfer robot from entering the workstation. Only when the protection door is open, the transfer robot can enter the processing region of the workstation, which can protect operation personnel and prevent a transfer robot from hitting the operation personnel.

Alternatively, the workstation includes a safety protection device 84 and a control unit 87. The safety protection device 84 is a detection sensor. The control unit sends, to the transfer robot based on an electrical signal that is detected by the detection sensor and that indicates that the transfer robot enters the processing region of the workstation by mistake, an instruction of stopping entering the workstation. For example, when goods or another cargo falls into the processing region of the workstation, the detection sensor detects that there is an obstacle in the processing region, and the control unit 87 sends, to the transfer robot based on an electrical signal from the detection sensor, an instruction of stopping entering the workstation, to prevent the transfer robot from hitting the cargo. Alternatively, for example, when a specific body part of operation personnel extends into the processing region, it can also be detected by the detection sensor, so that the receptacle robot can be prevented from hitting the operation personnel, and personal safety of the operation personnel is protected.

In an embodiment, the workstation may possibly further include an identification device 85. The identification device 85 may be a barcode or chip reading device, configured to identify and perform verification on receptacle information. When the transfer robot brings the receptacle to the workstation, the receptacle can be identified through the barcode or chip reading device, and the identified information is notified to the system, to help the system to issue an operation instruction for a next step.

In an embodiment, the workstation may further include a visual identification device 86 and a control unit 87. The visual identification device 86 is configured to identify goods or a quantity of the goods in the receptacle, or identify an action performed by operation personnel. The control unit 87 may issue an alarm signal based on error information obtained by the visual identification device 86. The visual identification device 86, for example, may be a camera. When operation personnel place goods in the receptacle, the visual identification device 86 may identify information, such as a type and a quantity, of the goods in the receptacle through visual photography. If it is found that the type and the quantity of the goods in the receptacle do not match information pre-stored in the system, warning information may be issued.

The visual identification device 86 may also be configured to identify an action performed by operation personnel. If an error occurs in the action performed by the operation personnel, the control unit 87 may also issue corresponding warning information.

In the warehousing system of the present disclosure, a shelf is divided into different regions in the vertical direction, to correspond to different robot operations. The transport robot is responsible for adjusting a location of a receptacle between regions or in a same region, and the transfer robot is responsible for transporting the receptacle from a cache region to an operation destination for operation.

The warehousing system disclosed in the present disclosure well overcomes a series of low-efficiency and low-cost performance defects caused by that a transport robot needs to directly transport a receptacle to an operation point for operation in the conventional technology, which is replaced with cooperation between two robots.

With the support of algorithm scoring, the system may further place a receptacle with a higher outbound delivery probability into the cache region. When operations are performed on the receptacle, the receptacle only needs to be transported by a transfer robot, which greatly reduces operational actions performed by a transport robot that is slow and costly. Alternatively, a receptacle with a higher outbound delivery probability may be placed into a cache region closer to the workstation, to further reduce a transport time and improves the working efficiency.

The warehousing system does not require a conveyor line device, which greatly improves the flexibility of the solution and has advantages such as convenient rapid construction and dynamic addition or removal of a robot.

The present disclosure provides a plurality of embodiments, which may be implemented individually or in combination. For example, transfer in the embodiments may be implemented by the transfer robot according to the present disclosure, or by another robot that can implement a similar transfer capability. In another example, all channels in the foregoing embodiment may be arranged separately, or may be combined together, to enrich path planning of robots. In still another example, the foregoing structure of the first receptacle berth and the second receptacle berth may be used in the cache region and the receptacle storage region of the transfer system or warehousing system. Certainly, another appropriate structure may be used in the cache region and the receptacle storage region provided that the transfer robot can complete fast transfer of receptacle pickup and receptacle conveying in the cache region.

The receptacle transfer system and the warehousing system according to the present disclosure are both controlled by a control system, for example, perform corresponding operations on the transport robot and the transfer robot through a detection unit and a control unit in the control system, and details are not described herein again.

FIG. 12A is a schematic structural diagram of a warehousing system according to an embodiment of the present disclosure. As shown in FIG. 12A, the warehousing system includes a warehouse storage area. The warehouse storage area includes a plurality of shelves arranged in a matrix. A receptacle cache region and a receptacle storage region are arranged on the shelf. The warehousing system further includes a workstation area. The workstation area includes at least one workstation. The workstation is configured for performing picking processing on a receptacle.

It should be noted that when transferring a receptacle from the warehouse storage area to the workstation for picking processing, an RS+P receptacle to human solution may be adopted. This solution is a high-storage, high-flexibility, and high-efficiency warehousing scheduling solution. During specific implementation, during outbound delivery of a receptacle at a high-layer storage berth on a shelf, an RS robot (that is, a transport robot) needs to be first configured to transport the receptacle from the high-layer storage berth to a cache berth on the first layer of the shelf, and a P robot (that is, a transfer robot) goes to the cache berth to relay the receptacle to the workstation. The RS+P receptacle to human solution adopts 5 to 8 meters single-depth or double-depth storage, to maximize a storage capability, can match RS robots with various box holding forms, uses P robots to implement high-flexibility picking without using a conveyor line, and is mainly applied to a sub-packaging and picking scenario, a retail MFC scenario, and the like for a receptacle with a small size, a large quantity of stock keeping units (SKUs), and a high flexibility requirement to human. The retail MFC scenario refers to a retail management system created based on Microsoft foundation classes (MFCs) and is an active micro-fulfillment center implementing active picking, replacing personnel with online orders, replacing personnel with robot picking orders and re-shelving, which reduces operation costs of retailers, and helps the retailers to provide convenient electronic commerce services, thereby further increasing sales.

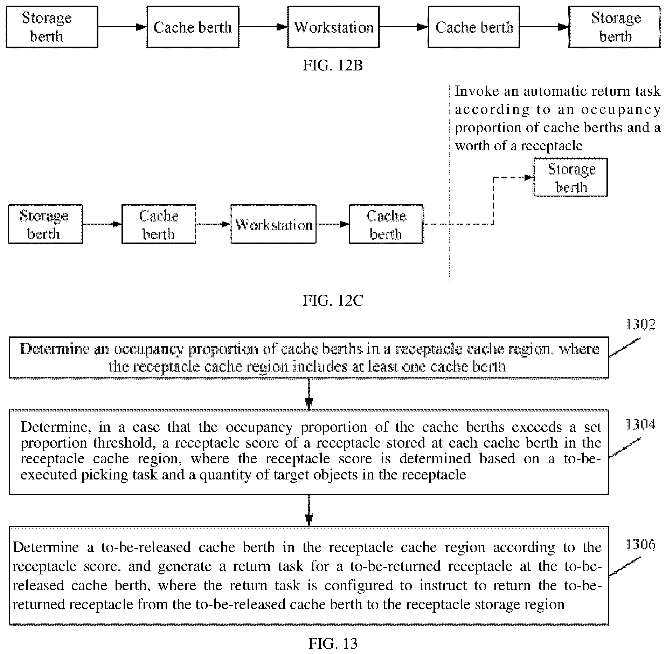

In the foregoing solution, a P robot transporting a receptacle to the workstation can only pick up the receptacle from a cache berth on the first layer of a shelf. Therefore, appropriate utilization of the cache berth greatly affects overall outbound delivery efficiency of the receptacle. Currently, the cache berth is only used for receptacle handover. In this way, a receptacle can only be stored at a high-layer storage berth. When the workstation requires the receptacle, an RS robot picks up the receptacle and place it at a cache berth to wait for a P robot to transfer. After picking is completed, the receptacle is conveyed back to the cache berth from the workstation, and waits for the RS robot to return it to the high-layer storage berth. FIG. 12B is a processing flowchart of a receptacle transferring method in warehousing scheduling according to an embodiment of the present disclosure. As shown in FIG. 12B, a storage berth-cache berth-workstation-cache berth-storage berth transfer operation is repeatedly performed on a receptacle.

It can be learned from the above that a high-worth receptacle may be hit by a plurality of picking tasks. Therefore, when the first picking task is completed, the receptacle is conveyed back to a high-layer storage berth, and when a next picking task arrives, the receptacle needs to be moved down from the high-layer storage berth again. Actually, in addition to a function of handing over a receptacle between robots, the cache berth may further implement a function of storing some receptacles. For example, the foregoing high-worth receptacle may be temporarily stored at the cache berth when it is conveyed back to the cache berth after the first order is completed. In this way, transportation resources of some RS robots can be released, which improves efficiency. However, the receptacle is temporarily stored at the cache berth, which consequently makes it easy to occupy all cache berth resources. A corresponding scheduling management method is needed to control the cache berth resources.

Therefore, based on the characteristics of the RS+P product solution, a warehousing scheduling method is provided in this embodiment of the present disclosure. The cache berth implements both a receptacle handover function and a receptacle storage function. A receptacle return task may be automatically generated according to an occupancy proportion of cache berths in the receptacle cache region and a receptacle score of a receptacle stored at each cache berth, to automatically adjust the occupancy proportion of the cache berths in the receptacle cache region. FIG. 12C is a processing flowchart of a warehousing scheduling method according to an embodiment of the present disclosure. As shown in FIG. 12C, a receptacle is transported from a storage berth to a cache berth, and transferred to the workstation. After the receptacle is used, the receptacle is returned to the cache berth, that is, the procedure ends. Then, an occupancy proportion of cache berths is introduced. An automatic return task is invoked according to the occupancy proportion of the cache berths and a worth of the receptacle to return the receptacle to a high-layer storage berth. Because the procedure ends when the receptacle is returned to the cache berth, the occupancy proportion of the cache berths always increases. Therefore, there needs to be a function of automatically returning the receptacle to the receptacle storage region, to control the balance of the occupancy proportion of the cache berths.

In the present disclosure, a warehousing scheduling method is provided, and the present disclosure also relates to a warehousing scheduling device, a computing device, and a computer-readable storage medium, which are described in detail one by one in the following embodiments.

FIG. 13 shows a flowchart of a warehousing scheduling method according to an embodiment of the present disclosure. The warehousing scheduling method is performed using the foregoing warehousing system, and specifically includes the following steps 1302, 1304, and 1306.

Step 1302: Determine an occupancy proportion of cache berths in a receptacle cache region, where the receptacle cache region includes at least one cache berth.

Specifically, the warehousing system includes a warehouse storage area. The warehouse storage area includes a plurality of shelves arranged in a matrix. A receptacle cache region and a receptacle storage region are arranged on the shelf. The receptacle cache region is located on a lower layer of the shelf and provides a receptacle handover function and a receptacle storage function. The receptacle storage region is located on a higher layer of the shelf and provides a receptacle storage function.

That is, the receptacle storage region is located above the receptacle cache region. For example, the bottom layer of the shelf serves as the receptacle cache region, and layers in the shelf other than the bottom layer serve as the receptacle storage region.

The receptacle cache region may include at least one cache berth. Each cache berth may cache one receptacle. The receptacle refers to a structure configured to store a target object. The target object may be an item that needs to be picked. In this case, the receptacle may be a cargo box for storing the item.

It should be noted that the warehousing system further includes a workstation area, including at least one workstation. The workstation is configured for performing picking processing on a receptacle. Receptacles are generally stored in the receptacle storage region. When a receptacle is transferred from the warehouse storage area to the workstation for picking processing, that is, during outbound delivery of the receptacle in a receptacle storage region, a transport robot needs to be used first to transport the receptacle from a receptacle storage berth to a cache berth in the receptacle cache region, and a transfer robot goes to the cache berth and relays the receptacle to the workstation. When the picking is completed, the receptacle conveyed back from the workstation to the cache berth is stored at the cache berth, to release transportation resources of some transport robots, which improves the efficiency of the outbound delivery of the receptacle. However, it is easy for receptacles at the cache berths to occupy all cache berth resources. Therefore, the occupancy proportion of the cache berths in the receptacle cache region may be determined. Occupancy of the cache berth is dynamically adjusted based on the occupancy proportion, to ensure that there are enough cache berths for executing the receptacle handover task.

In an actual application, the occupancy proportion of the cache berths in the receptacle cache region refers to a proportion of occupied cache berths in the receptacle cache region to a total quantity of cache berths. The occupancy proportion may be obtained by dividing a quantity of the occupied cache berths in the receptacle cache region by the total quantity of cache berths. Therefore, during specific implementation, a quantity of occupied cache berths in the receptacle cache region may be determined first, and the occupancy proportion of the cache berths in the receptacle cache region is determined based on the quantity of the occupied cache berths with reference to the total quantity of cache berths.

In an example of this embodiment, the occupied cache berths in the receptacle cache region change dynamically. Therefore, the determining the occupancy proportion of the cache berths in the receptacle cache region may be specifically implemented through the following steps:
determining a quantity of occupied cache berths in the receptacle cache region;
determining a quantity of to-be-occupied cache berths and a quantity of to-be-released cache berths according to a current receptacle transferring task; and
determining the occupancy proportion of the cache berths in the receptacle cache region according to the quantity of occupied cache berths, the quantity of to-be-occupied cache berths, and the quantity of to-be-released cache berths.

Specifically, the cache berths in the receptacle cache region may be classified into four categories: currently occupied, currently vacant, to-be-occupied, to-be-released. The currently occupied refers to a cache berth currently storing a receptacle in the receptacle cache region. The currently vacant refers to a cache berth currently storing no receptacle in the receptacle cache region. The to-be-occupied refers to a cache berth that currently stores no receptacle in the receptacle cache region and into which a receptacle is about to transferred. The to-be-released refers to a cache berth that currently stores a receptacle in the receptacle cache region, where, however, the stored receptacle is about to be returned to the receptacle storage region.

Therefore, the quantity of occupied cache berths refers to a quantity of cache berths that are currently occupied. The quantity of occupied cache berths may be determined by directly reading cache berths currently storing receptacles in the cache berths, and counting a quantity of cache berths currently storing receptacles. The quantity of to-be-occupied cache berths refers to a quantity of cache berths that are about to be occupied. The quantity of to-be-released cache berths refers to a quantity of cache berths that are about to be released.

It should be noted that because both transferring a receptacle from the receptacle storage region to the cache berth and returning the receptacle from the cache berth to the receptacle storage region are implemented by a robot based on a receptacle transferring task. That is, the warehousing scheduling platform may generate a receptacle transferring task, and deliver the receptacle transferring task to the robot. After receiving the task, the robot executes tasks in sequence, to transfer the receptacle from the receptacle storage region to the cache berth or return the receptacle from the cache berth to the receptacle storage region.

Therefore, a quantity of to-be-occupied cache berths and a quantity of to-be-released cache berths may be determined according to a current receptacle transferring task. In an actual application, the warehousing scheduling platform may store receptacle transferring tasks to be executed and being executed. The receptacle transferring tasks each carry a transferring start location and a transferring end location. For each receptacle transferring task, if the transferring start location is a cache berth, then a quantity of to-be-released cache berths is increased by 1. If the transferring start location is the receptacle storage region, then a quantity of to-be-occupied cache berths is increased by 1. All the receptacle transferring tasks are traversed in sequence, so that the quantity of to-be-occupied cache berths and the quantity of to-be-released cache berths can be determined.

In addition, when the occupancy proportion of the cache berths in the receptacle cache region is determined according to the quantity of occupied cache berths, the quantity of to-be-occupied cache berths, and the quantity of to-be-released cache berths, a sum of the quantity of occupied cache berths and the quantity of to-be-occupied cache berths may be determined first, and then, the quantity of to-be-released cache berths is subtracted from the sum, so that an updated quantity of occupied cache berths in the receptacle cache region can be determined. The occupancy proportion of the cache berths in the receptacle cache region may be obtained by dividing the updated quantity of occupied cache berths by the total quantity of cache berths.

In this embodiment of the present disclosure, a quantity of to-be-occupied cache berths and a quantity of to-be-released cache berths may be determined according to a current receptacle transferring task, and then, the occupancy proportion of the cache berths in the receptacle cache region is determined with reference to the quantity of occupied cache berths, the quantity of to-be-occupied cache berths, and the quantity of to-be-released cache berths. In this way, when the occupancy proportion of the cache berths in the receptacle cache region is determined, a dynamic change of the cache berths in the receptacle cache region is taken into account, so that the occupancy proportion of the cache berths in the receptacle cache region is more accurate and fits an actual application scenario, which ensures the accuracy and real-time performance of dynamic control on the cache berths in the receptacle cache region.

Step 1304: Determine, in a case that the occupancy proportion of the cache berths exceeds a set proportion threshold, a receptacle score of a receptacle stored at each cache berth in the receptacle cache region, where the receptacle score is determined based on a to-be-executed picking task and a quantity of target objects in the receptacle.

Specifically, the set proportion threshold refers to a set water level, and is configured to ensure that the occupied cache berths in the receptacle cache region are not excessive. For example, the set proportion threshold may be 60%, 70%, 80%, or the like. The to-be-executed picking task refers to a task of waiting for picking target objects from the receptacle. The quantity of target objects in the receptacle refers to inventory of the receptacle.

In addition, the receptacle score may represent a worth of the receptacle, that is, a probability that the receptacle is frequently hit by picking tasks. The receptacle score is obtained by scoring the receptacle. The receptacle scoring is a criterion for determining the worth of the receptacle. If the receptacle score is high, the receptacle is considered to be of a larger worth. After being conveyed back from the workstation to the cache berth, if the receptacle score is high, the receptacle is kept at the cache berth as longer as possible. That is, a receptacle with a higher receptacle score is stored in the receptacle cache region, and a receptacle with a lower receptacle score is stored in the receptacle storage region.

In an actual application, the warehouse scheduling platform may score a receptacle according to a matching degree between the inventory of the receptacle and a real-time picking task. That is, if the receptacle can supply target objects for a plurality of picking tasks, the receptacle has a higher score. In addition, a receptacle score of a receptacle with high popularity in the receptacle cache region is higher than a receptacle score of a receptacle with high popularity in the receptacle storage region, to ensure that the receptacle with high popularity in the receptacle cache region is not replaced. The receptacle score of the receptacle with high popularity in the receptacle storage region is higher than a score of a receptacle that does not match a to-be-executed picking task or includes an excessive quantity of target objects in the receptacle cache region, to ensure that a receptacle that cannot be utilized in the receptacle cache region is returned to the receptacle storage region. The receptacle with high popularity refers to a receptacle whose receptacle popularity is higher than a set threshold. The receptacle popularity refers to a quantity of times that a receptacle is possibly matched and used for executing a to-be-executed picking task, that is, a quantity of times that the receptacle may be transported. In this way, it is guaranteed that the receptacle score may change a cache berth in the receptacle cache region to a dynamic scarce resource that is competed for by receptacles. A receptacle that matches to-be-executed picking tasks more times may stay in the receptacle cache region for a longer time.

It should be noted that in a case that the occupancy proportion of the cache berths exceeds the set proportion threshold, indicating that too many receptacles are stored in the receptacle cache region, and there may possibly be not enough cache berths for performing receptacle handover. In this case, receptacles at some cache berths in the receptacle cache region need to be released and returned to the receptacle storage region. To determine receptacles at which cache berths are returned to the receptacle storage region, a receptacle score of a receptacle stored at each cache berth in the receptacle cache region may be determined. The receptacle score is determined based on a to-be-executed picking task and a quantity of target objects in the receptacle and may represent a matching program between the receptacle and the to-be-executed picking task, to identify the worth of the receptacle. Therefore, a to-be-released cache berth in the receptacle cache region may be subsequently based on the receptacle scores of the receptacles stored at the cache berths in the receptacle cache region, so that a to-be-returned receptacle at the to-be-released cache berth is returned to the receptacle storage region.

In addition, receptacle scores of receptacles in the warehouse storage area may be determined regularly, that is, the receptacle scores may be updated regularly based on a current to-be-executed picking task and a current quantity of target objects in a receptacle.

In an example of this embodiment, the receptacle score can be divided into a base score and a popularity value. That is, before the receptacle scores of the receptacles stored at the cache berths in the receptacle cache region are determined, the following steps may be further included:
determining a quantity of picking tasks matching with at least one target object group in a first receptacle, where the first receptacle is any receptacle stored in the receptacle cache region and the receptacle storage region, and target objects with a same target object identifier form one target object group;
determining a popularity value of the first receptacle according to the quantity of picking tasks matching with the at least one target object group;
determining a receptacle type of the first receptacle, and determining a base score of the first receptacle according to the receptacle type; and
determining a receptacle score of the first receptacle according to the popularity value and the base score.

It should be noted that a receptacle is stored in the receptacle storage region or the receptacle cache region. The transfer robot can only transfer a receptacle located in the receptacle cache region. In this scenario, it is expected that a receptacle stored in the receptacle cache region has a higher turnover rate. That is, a receptacle stored in the receptacle cache region may be hit by to-be-executed picking tasks a plurality of times and transferred by a transfer robot a plurality of times. Therefore, scoring the receptacle is to give a high score to a receptacle that has a potential of being used a plurality of times and place the receptacle in the receptacle cache region in advance. For a target object in a receptacle, regardless of how many types (for example, one type or 10 types) of target objects are required by a to-be-executed picking task, if one receptacle is always matched, the receptacle is always transferred once, and there is no difference for a robot that picks up the receptacle. Therefore, importance of a receptacle may be determined based on a quantity of times of potentially being matched by a currently unexecuted picking task. That is, the receptacle may match several to-be-executed picking tasks instead of having several products matched.

In an actual application, for the first receptacle, target objects with a same target object identifier in the first receptacle may be defined as one target object group. A quantity of target objects in one receptacle may be regarded as being formed by several target object groups. That is, one receptacle includes at least one target object group. One target object group includes at least one target object, and target objects included in the target object group have a same target object identifier. For any target object group in the receptacle, demands of which to-be-executed picking tasks that the inventory of the target object group can meet may be calculated, and a quantity of picking tasks matching the target object group is counted. The quantity of picking tasks may represent a potential quantity of times of the target object group being accessed. Quantities of picking tasks of the target object groups in the first receptacle may be summed to obtain a potential access count of the first receptacle, and then, a popularity value of the first receptacle may be determined based on the potential access count. By analogy, popularity values of receptacles may be determined.

The target object identifier refers to information, such as a character/code, used for identifying a target object. Target objects with a same target object identifier means belonging to a same target object group. Target objects with different target object identifiers mean belonging to different target object groups. If a target object is goods, a target object identifier may be a goods code (skuCode) and a batch code (batchCode). Goods with a same goods code (skuCode) and a same batch code (batchCode) belong to a same goods group, and goods with different goods codes (skuCode) and different batch codes (batchCode) belong to different goods groups.

In addition, to calculate demands of which to-be-executed picking tasks that an inventory quantity of the target object group can meet, a quantity of picking tasks matching the target object group is counted. For each to-be-executed picking task, if the inventory quantity of the target object group does not meet a demand quantity of the to-be-executed picking task, a coefficient may be set, so that the inventory quantity is divided by the demand quantity, and then, multiplied by the coefficient, to obtain a count of the to-be-executed picking tasks. If the coefficient is 0.5, assuming that the inventory is 8, and a demand quantity of a picking task is 10, then a picking task count of the to-be-executed picking task is 0.5*(8/10). If the inventory quantity of the target object group meets the demand quantity of the to-be-executed picking task, then the count of the to-be-executed picking tasks is determined to be 1. All to-be-executed picking tasks are traversed in this way, and a final counting result is a quantity of picking tasks matching the target object group.

Second, different to-be-executed picking tasks may have different priorities, and the priorities correspond to priority coefficients. In this case, after counting results of the to-be-executed picking tasks are determined, the counting results of the to-be-executed picking tasks may be multiplied by the corresponding priority coefficients and then summed, to obtain the quantity of picking tasks matching the target object group.

During specific implementation, some to-be-executed picking tasks may have determined to obtain a target object from which a receptacle. In this case, a target object group to which the target object belongs in the receptacle is pre-hit. Therefore, after quantities of picking tasks of target object groups in the first receptacle are determined, and the quantities of picking tasks of the target object groups in the first receptacle are summed, whether the target object groups include a pre-hit target object group may be further determined. If the target object groups include a pre-hit target object group, a corresponding count may be added to the summation result according to a quantity of pre-hit target object groups, to obtain a potential access count of the first receptacle.

Further, when the popularity value of the first receptacle is determined based on the potential access count, the potential access count may be mapped to a set fourth score range. Upper and lower boundaries of the fourth score range are a difference between upper and lower boundaries of the first score range. During implementation, the potential access count of the first receptacle may be divided by a maximum potential access count of the receptacles, and then multiplied by a difference between the upper and lower boundaries of the fourth score range, to obtain the popularity value of the first receptacle. For example, the fourth score range is 0 to 20, assuming that the maximum potential access count of the receptacles is 38, then the potential access count of the first receptacle is T/38*20, that is, the popularity value of the first receptacle may be obtained.

Specifically, the receptacle score may be divided into three ranges, including the first score range, a second score range, and a third score range. The first score range is higher than the second score range, and the second score range is higher than the third score range. The three score ranges may be used for determining base scores of different types of receptacles.

In this embodiment of the present disclosure, the receptacle score can be divided into a receptacle popularity value and a base score. Different base scores may be set for different types of receptacles, and then popularity values matching picking tasks are added to the base scores, to determine the receptacle scores, which improves the accuracy of determining the receptacle score.

In an example of this embodiment, corresponding base scores may be preset for different receptacle types. That is, the base score of the first receptacle is determined based on a receptacle type. A specific implementation process may be as follows:
determining, in a case that the receptacle type of the first receptacle is a hit receptacle, that the base score of the first receptacle is a first set value, where the hit receptacle refers to a receptacle selected to execute a picking task, and the first set value is a lower boundary value of a first score range;
determining, in a case that the receptacle type of the first receptacle is a non-hit receptacle, and the first receptacle is a receptacle in the receptacle cache region, that the base score of the first receptacle is a second set value, and the second set value is a lower boundary value of a second score range; and
determining, in a case that the receptacle type of the first receptacle is a non-hit receptacle, and the first receptacle is a receptacle in the receptacle storage region, that the base score of the first receptacle is a third set value, where the third set value is a lower boundary value of a third score range.

The first score range, the second score range, and the third score range are obtained through division based on the receptacle scores, the first set value is larger than the second set value, and the second set value is larger than the third set value.

It should be noted that some to-be-executed picking tasks may have determined to obtain a target object from which receptacle. In this case, the receptacle has been determined to be hit, and subsequently, needs to be transported to the workstation, so that the target object is picked from the receptacle. Therefore, in a case that the receptacle type of the first receptacle is a hit receptacle, it is determined that the base score of the first receptacle is the first set value.

In an actual application, for a receptacle that is not hit, its corresponding base score may be set according to a storage location. In a case that the receptacle type of the first receptacle is a receptacle in the receptacle cache region, it is determined that the base score of the first receptacle is the second set value. In a case that the receptacle type of the first receptacle is a receptacle in the receptacle storage region, it is determined that the base score of the first receptacle is the third set value. The first set value is larger than the second set value, and the second set value is larger than the third set value.

The first score range is a receptacle score range of a hit receptacle, the second score range is a receptacle score range of a receptacle in the receptacle cache region, and the third score range is a receptacle score range of a receptacle in the receptacle storage region. For example, the first score range is 80 to 100, and the first set value is 80. The second score range is 60 to 80, and the second set value is 60. The third score range is 40 to 60, and the third set value is 40.

During specific implementation, for each target object group (skuCode, batchCode) stored in the warehouse storage area, a quantity of picking tasks associated with the target object group (that is, how many to-be-executed picking tasks have demands for this target object group) is calculated. The more the associations, the more important this target object group is considered, and for subsequent calculations, polling starts from the most important target object group.

When the base score of the receptacle in the receptacle cache region is determined, polling starts from the most important target object group. For each target object group, there is a series of candidate available receptacles that can satisfy a picking task demand for the target object group. It starts from picking up a receptacle with the highest popularity value (that is, the highest matching degree with the to-be-executed picking task) in the receptacle cache region until the picking task demand for the target object group is satisfied (that is, demands of the to-be-executed picking tasks for the target object group), or receptacles that can satisfy the picking task demand for the target object group in the receptacle cache region are used up. In this process, every time one receptacle in the receptacle cache region is used, a base score of the receptacle is set to the second set value (for example, 60 points). A receptacle score of the receptacle is a sum of the base score of 60 points and a popularity value corresponding to the receptacle. In addition, a remaining demand quantity of the picking task for the target object group is updated based on the picking task demand that the receptacle in the receptacle cache region can satisfy, and the remaining demand quantity may be satisfied by the receptacle in the receptacle storage region.

When the base score of the receptacle in the receptacle storage region is determined, picking task demands for some target object groups can already be satisfied by the receptacle in the receptacle cache region (that is, the inventory of the target object group stored in the receptacle in the receptacle cache region is sufficient), demands for some target object groups cannot be satisfied by the receptacle in the receptacle cache region (that is, the inventory of the target object group stored in the receptacle in the receptacle cache region is insufficient), and the obtaining from the receptacle in the receptacle storage region needs to be continued. Polling starts from the most important target object group. If a picking task demand for the target object group has been satisfied by the receptacle in the receptacle cache region, it is skipped. If the picking task demand for the target object group is not satisfied by the receptacle in the receptacle cache region, and for the target object group, there is also a candidate available receptacle in the receptacle storage region, and similar to the process in the receptacle cache region, it starts from picking up a receptacle with the highest popularity value in the receptacle storage region until the picking task demand for the target object group is satisfied, or receptacles that can satisfy the picking task demand for the target object group in the receptacle storage region are used up. In this process, every time one receptacle in the receptacle storage region is used, a base score of the receptacle is set to the third set value (for example, 40 points). A receptacle score of the receptacle is a sum of the base score of 40 points and a popularity value corresponding to the receptacle. In addition, a remaining demand quantity of the picking task for the target object group is updated based on the picking task demand that the receptacle in the receptacle storage region can satisfy, and if there are still picking task demands for some target object groups that are not satisfied, that is, the inventory is indeed insufficient, processing is not performed any more.

The remaining receptacles that have not been selected are scored based on a fourth score range. Base scores of the remaining receptacles in the receptacle cache region that have not been selected may be set to a fourth set value (for example, 20 points). Base scores of the remaining receptacles in the receptacle storage region that have not been selected may be set to a fifth set value (or example, 0 points).

The first score range is higher than the second score range, the second score range is higher than the third score range, and the third score range is higher than the fourth score range. The four score ranges constitute a range of the receptacle score. The first set value is larger than the second set value. The second set value is larger than the third set value. The third set value is larger than the fourth set value. The fourth set value is larger than the fifth set value. The fourth set value and the fifth set value are values within the fourth score range. For example, the fourth set value is a middle value of the fourth score range. The fifth set value is a lower boundary value of the fourth score range. For example, the first score range is 80 to 100, and the first set value is 80. The second score range is 60 to 80, and the second set value is 60. The third score range is 40 to 60, and the third set value is 40. The fourth score range is 0 to 40, the fourth set value is 20, and the fifth set value is 0.

It should be noted that for the hit receptacle, the transport robot has determined that the hit receptacle is to be transported. That is, the hit receptacle is not necessarily a receptacle with higher popularity, but the hit receptacle is a receptacle that is determined to have been hit by a specific to-be-executed picking task and that is definitely to be transported to the workstation subsequently. Therefore, regardless of whether the hit receptacle is located in the storage region or the cache region, a score of the hit receptacle should be set large, to ensure that the hit receptacle can be located in the cache region (or be transported to the cache region), and subsequently, be transported by a robot to the workstation. Therefore, a score of more than 80 points is given to the hit receptacle, to satisfy the consistency with the actual situation. However, this score is not very meaningful. Therefore, after being transported to the workstation to execute the picking task and conveyed back to the cache region, the hit receptacle still needs to be re-scored, to determine that the hit receptacle continues to stay in the cache region or is conveyed back to the storage region.

Moreover, high scores for matching orders in the receptacle storage region are distributed between 40 to 60 points. When the receptacles are moved to the cache region, if there is no vacant location in the cache region, the receptacles should not replace receptacles (60 to 80 points) with higher frequencies in the cache region, but may replace receptacles (20 to 40 points) with lower frequencies. In addition, there are two identical receptacles in the cache region. Because the former one matches an order demand, and the latter one does not match an order demand, for example, their popularity values are both 15 originally, and according to the foregoing logic, the two receptacles may be scored separately to 75 and 35. A meaning represented by this situation in the physical world is that a receptacle including a specific target object may possibly be moved to the cache region too many times, and some receptacles need to be moved back to the storage region. It is also possible that the algorithm simply does not reserve redundant space. Therefore, when a low-score receptacle in the cache region is replaced with a high-score receptacle in the storage region, a receptacle with the lowest score in a low-score region is selected as much as possible for replacement. Because for each layer, score setting has a comparative meaning. A receptacle with a mapping score of 15 has a greater chance of being used a plurality of times than a receptacle with a mapping score of 10.

Step 1306: Determine a to-be-released cache berth in the receptacle cache region according to the receptacle score, and generate a return task for a to-be-returned receptacle at the to-be-released cache berth, where the return task is configured to instruct to return the to-be-returned receptacle from the to-be-released cache berth to the receptacle storage region.

It should be noted that the receptacle score may represent the worth of the receptacle. Therefore, the to-be-released cache berth in the receptacle cache region may be determined according to the receptacle score, and a cache berth with a lower receptacle score in the cache berths in the receptacle cache region may be used as the to-be-released cache berth, to releases a receptacle at the cache berth.

In an actual application, after the to-be-released cache berth in the receptacle cache region is determined, it indicates that a receptacle at the to-be-released cache berth needs to be returned to the receptacle storage region. Therefore, the warehousing scheduling platform may generate a return task for a to-be-returned receptacle at the to-be-released cache berth. The return task may be delivered to a transport robot. The transport robot returns the to-be-returned receptacle from the to-be-released cache berth to the receptacle storage region.

In an example of this embodiment, how many cache berths need to be released may be determined based on a difference between the occupancy proportion and the set proportion threshold, and a to-be-released cache berth in the receptacle cache region is further determined. That is, the to-be-released cache berth in the receptacle cache region is determined according to the receptacle score, and a specific implementation process may be as follows:
determining a difference between the occupancy proportion and the set proportion threshold, and sorting the receptacle scores of the receptacles stored at the cache berths to determine a quantity of to-be-released cache berths according to the difference;
sorting the receptacle scores of the receptacles stored at the cache berths and selecting, according to a sorting result, to-be-released cache berths whose quantity is the quantity.

It should be noted that the difference between the occupancy proportion and the set proportion threshold may represent a quantity of excessively occupied cache berths in the receptacle cache region, and therefore, the quantity of to-be-released cache berths may be determined according to the difference. Specifically, the difference may be directly multiplied by a total quantity of cache berths as the quantity of to-be-released cache berths. That is, the quantity of excessively occupied cache berths is the quantity of to-be-released cache berths. Alternatively, to avoid frequently releasing a receptacle at a cache berth, a set value times the difference may be multiplied by a total quantity of cache berths as the quantity of to-be-released cache berths. That is, more cache berths are released at a time.

In this embodiment of the present disclosure, after the quantity of to-be-released cache berths is determined, receptacle scores of receptacles stored at cache berths can be sorted from high to low (or from low to high), and cache berths corresponding to the quantity of receptacle scores ranking lower (ranking higher) are selected as to-be-released cache berths. In this way, in a case that the occupancy proportion of the cache berths in the receptacle cache region exceeds the set proportion threshold, receptacles with low receptacle scores in the receptacle cache region are returned to the receptacle storage region, to release receptacle cache berths in the receptacle cache region.

For example, if a current lane has 8 receptacles at cache berths in the receptacle cache region, and a total quantity of cache berths is 10, that is, in this case, an occupancy proportion 0.8, assuming that a set proportion threshold is 0.6, in this case, it is determined that a difference is 0.2, multiplied by 10, and an obtained quantity of to-be-released cache berths is 2. In this case, 6 receptacles with highest receptacle scores are reserved in the receptacle cache region, and cache berths at which receptacles corresponding to the 2 lowest receptacle scores are located are used as to-be-released cache berths, to return the 2 receptacles with the lowest receptacle scores to the receptacle storage region.

In an example of this embodiment, a destination location may be carried in a return task. That is, a return task is generated for the to-be-returned receptacle at the to-be-released cache berth, and a specific implementation process may be as follows:
determining a target storage berth corresponding to the to-be-released cache berth; and
generating the return task based on the to-be-released cache berth and the target storage berth, where the return task is configured for returning the to-be-returned receptacle stored at the to-be-released cache berth to the target storage berth.

It should be noted that the target storage berth may be any storage berth in the receptacle storage region of each lane in the warehouse storage area. That is, the to-be-returned receptacle at the to-be-released cache berth may be returned to any storage berth in the receptacle storage region.

In an actual application, a vacant storage berth may be randomly selected from the receptacle storage region of each lane in the warehouse storage area as the target storage berth. A storage berth located in a same lane as the to-be-released cache berth is preferably selected. If there is no vacant storage berth in the receptacle storage region in the same lane as the to-be-released cache berth, a storage berth in a lane different from that of the to-be-released cache berth may be selected as the target storage berth.

In this embodiment of the present disclosure, a return task is generated based on the to-be-released cache berth and the target storage berth. That is, location identifiers of the to-be-released cache berth and the target storage berth are carried in the return task. After receiving the return task, a robot may return the to-be-returned receptacle stored at the to-be-released cache berth to the target storage berth to release the receptacle cache berth in the receptacle cache region, thereby dynamically adjusting the occupancy proportion of the cache berths in the receptacle cache region.

It should be noted that the warehousing system (that is, the warehouse storage area) includes at least two lanes, where the receptacle storage region and the receptacle cache region are arranged in each lane. After receptacle scoring is completed, with reference to the mechanism of automatically returning the receptacle, it can basically ensure that a probability of a high-score receptacle staying at a cache berth is higher than that of a low-score receptacle. However, due to reasons such as imbalance of picking tasks and imbalance of lane tasks, a manner of passively keeping a high-score receptacle at a cache berth may result in a low proportion of high-score receptacles at cache berths, and it is also possible that a specific lane has only high-score receptacles, while another lane has only low-score receptacles. Therefore, in this embodiment of the present disclosure, in addition to returning a low-score receptacle in the receptacle cache region to the receptacle storage region, a high-score receptacle in the receptacle storage region may also be transferred to the receptacle cache region.

In an actual application, to take keeping the occupancy proportion of receptacles stored in the cache region stable into account, a transferring task of transferring a high-score receptacle in the receptacle storage region to the receptacle cache region may be roughly divided into two categories, that is, a single-box transferring task and a replacement task, which are discussed one by one in the following embodiment.

In an example of this embodiment, in addition to the foregoing regularly determining the occupancy proportion of the cache berths in the receptacle cache region to return a low-score receptacle in the receptacle cache region to the receptacle storage region, a high-score receptacle in the receptacle storage region may also be regularly determined to transfer a high-score receptacle in the receptacle storage region to the receptacle cache region. That is, the warehousing scheduling method further includes:
determining, every first preset duration, a to-be-transferred receptacle in the receptacle storage region, where the to-be-transferred receptacle is to be transferred to the receptacle cache region;
determining a first cache berth corresponding to the to-be-transferred receptacle in the receptacle cache region; and
generating a receptacle transferring task for the to-be-transferred receptacle based on a first storage berth and the first cache berth, where the first storage berth is a storage location of the to-be-transferred receptacle in the receptacle storage region, and the receptacle transferring task is configured to instruct to transfer the to-be-transferred receptacle from the first storage berth to the first cache berth.

It should be noted that determining regularly, every first preset duration, a to-be-transferred receptacle in the receptacle storage region, where the to-be-transferred receptacle is to be transferred to the receptacle cache region;

Specifically, when the to-be-transferred receptacle in the receptacle storage region to be transferred to the receptacle cache region is determined, a preset maximum quantity of receptacles that can be transferred to the receptacle cache region during each update may be obtained first. After the maximum quantity of receptacles is determined, receptacles with highest receptacle scores and whose quantity is the maximum quantity of receptacles are selected from the storage berths of the receptacle storage region, and the selected receptacles are to-be-transferred receptacles, and may be transferred to the receptacle cache region.

In addition, candidate receptacles whose receptacle scores are higher than a score threshold are selected from storage berths of the receptacle storage region. If a quantity of candidate receptacles is greater than the maximum quantity of receptacles, candidate receptacles with the highest scores and whose quantity is the maximum quantity of receptacles are selected from the candidate receptacles, and the selected candidate receptacles are the to-be-transferred receptacles. If the quantity of candidate receptacle is not greater than the maximum quantity of receptacles, the candidate receptacles are directly used as to-be-transferred receptacles.

For example, 20 receptacles in the receptacle storage region may be transferred to the receptacle cache region for storage every 5 mm. Therefore, 20 receptacles with the highest scores may be selected from receptacles in the receptacle storage region as to-be-transferred receptacles. Alternatively, with reference to the score threshold, candidate receptacles whose scores are greater than the score threshold are selected from the receptacles in the receptacle storage region. If there are less than 20 candidate receptacles, for example, there are only 10 candidate receptacles, the 10 candidate receptacle are to-be-transferred receptacles.

In an actual application, after the to-be-transferred receptacle in the receptacle storage region to be transferred to the receptacle cache region is determined, a first cache berth corresponding to the to-be-transferred receptacle in the receptacle cache region may be determined, that is, a cache berth to which the to-be-transferred receptacle is to be transferred. The first cache berth and the first storage berth can be located in a same lane or may be located in different lanes. Then, the warehouse scheduling platform may generate a receptacle transferring task for the to-be-transferred receptacle based on the first storage berth and the first cache berth, and deliver the receptacle transferring task to a corresponding robot, to enable the robot to execute the transferring task, to transfer the to-be-transferred receptacle from the first storage berth to the first cache berth.

In this embodiment of the present disclosure, in addition to returning a low-score receptacle in the receptacle cache region to the receptacle storage region as described above, a to-be-transferred receptacle in the receptacle storage region to be transferred to the receptacle cache region may also be determined regularly. The to-be-transferred receptacle is a high-score receptacle in the current receptacle storage region, so that a high-score receptacle in the receptacle storage region can be transferred to the receptacle cache region regularly, thereby ensuring quality of a receptacle occupying a cache berth while ensuring a quantity of occupied cache berths in the receptacle cache region.

In an example of this embodiment, the warehousing system includes at least two lanes, where the receptacle storage region and the receptacle cache region are arranged in each lane. A specific implementation of determining a first cache berth corresponding to the to-be-transferred receptacle in the receptacle cache region is as follows:
determining whether there is an available cache berth in a first receptacle cache region, where the first receptacle cache region and the receptacle storage region in which the to-be-transferred receptacle is located belong to a same lane;
determining, if there is an available cache berth, the first cache berth from the available cache berth; and
determining the first cache berth from a second receptacle cache region if there is no available cache berth, where the second receptacle cache region and the receptacle storage region in which the to-be-transferred receptacle is located do not belong to a same lane.

It should be noted that when the first cache berth corresponding to the to-be-transferred receptacle in the receptacle cache region is determined, whether there is an available cache berth in the first receptacle cache region that belongs to a same lane as the receptacle storage region in which the to-be-transferred receptacle is located may be determined preferentially. That is, the to-be-transferred receptacle may be preferentially transferred to a cache berth of the receptacle cache region in the same lane. The available cache berth includes a vacant cache berth and/or a cache berth with a low receptacle score.

In an actual application, if there is an available cache berth in the first receptacle cache region, it means that the to-be-transferred receptacle can be transferred to the cache berth in the same lane, that is, the first cache berth may be determined from available cache berths in the first receptacle cache region. During specific implementation, a vacant cache berth in the available cache berths may be preferentially determined as the first cache berth (if there are a plurality of vacant cache berths, one cache berth is randomly selected). If the available cache berths are all cache berths with low receptacle scores, indicating that there are receptacles stored at the available cache berths, but receptacle scores of the stored receptacles are low, a cache berth with a lowest score is preferentially selected as the first cache berth. In this case, the to-be-transferred receptacle may be transferred to the first cache berth to replace the receptacle with a lower receptacle score at the first cache berth.

In addition, if there is no available cache berth in the first receptacle cache region, it indicates that cache berths in the same lane are used up, and are all occupied by high-score receptacles. Therefore, in this case, the to-be-transferred receptacle may be transferred to a cache berth in another lane, that is, transferred across lanes. That is, the first cache berth is determined from a second receptacle cache region that does not belong to a same lane as the receptacle storage region in which the to-be-transferred receptacle is located. During specific implementation, the first cache berth is selected from the second receptacle cache region with reference to whether there is vacant cache berth in second receptacle cache regions and receptacle scores of occupied cache berths.

In this embodiment of the present disclosure, the to-be-transferred receptacle may be transferred to a cache berth in a same lane, or the to-be-transferred receptacle may be transferred to a cache berth in another lane. When a high-score receptacle in the receptacle storage region is transferred to the receptacle cache region, that is, the high-score receptacle may be transferred in the same lane or across lanes, which balances receptacle scores of receptacles stored in the receptacle cache regions of different lanes and avoids high-score receptacles from accumulating in a specific lane.

In this embodiment, when the first cache berth and the first storage berth belong to the same lane, that is, during intra-lane transferring, a receptacle transferring task is generated for the to-be-transferred receptacle based on the first storage berth and the first cache berth, and a specific implementation process is as follows:
determining whether a receptacle is currently stored at the first cache berth;
generating, if a receptacle is stored, a replacement task for the receptacle stored at the first cache berth, where the replacement task is configured to instruct a transport robot to return the receptacle stored at the first cache berth to the receptacle storage region and transport the to-be-transferred receptacle from the first storage berth to the first cache berth; and
generating, if no receptacle is stored, a first receptacle transport task for the to-be-transferred receptacle based on the first storage berth and the first cache berth, where the first receptacle transport task is configured to instruct the transport robot to transport the to-be-transferred receptacle from the first storage berth to the first cache berth.

It should be noted that a receptacle transferring task is generated for the to-be-transferred receptacle based on the first storage berth and the first cache berth. The receptacle transferring task is to transfer the to-be-transferred receptacle from the first storage berth to the first cache berth. Therefore, whether a receptacle is stored at the first cache berth is determined first, and if a receptacle is stored, the to-be-transferred receptacle needs to be configured to replace the receptacle currently stored at the first cache berth. Therefore, in this case, a replacement task is generated for the receptacle stored at the first cache berth. The warehousing scheduling platform can deliver the scheduling task to a transport robot, and the transport robot may return the receptacle stored in the first cache berth to the receptacle storage region, and transport the to-be-transferred receptacle from the first storage berth to the first cache berth.

Returning the storage receptacle in the first cache berth to the receptacle storage region, and transporting the to-be-transferred receptacle from the first storage berth to the first cache berth may both be executed successively by one transport robot, or may be executed simultaneously by two transport robots. When the storage receptacle at the first cache berth is returned to the receptacle storage region, a destination storage berth needs to be determined. In this case, a storage berth can be randomly determined from the receptacle storage region as the destination storage berth, and a location identifier of the destination storage berth is carried in the replacement task, to enable the transport robot to return the receptacle stored at the first cache berth to the destination storage berth.

In addition, if no receptacle is stored, it indicates that the first cache berth is currently vacant. In this case, the to-be-transferred receptacle may be directly transported to the first cache berth. That is, a first receptacle transport task is generated for the to-be-transferred receptacle based on the first storage berth and the first cache berth. That is, the first receptacle transport task carries location identifiers of the first storage berth and the first cache berth, to enable the transport robot to transport the to-be-transferred receptacle from the first storage berth to the first cache berth.

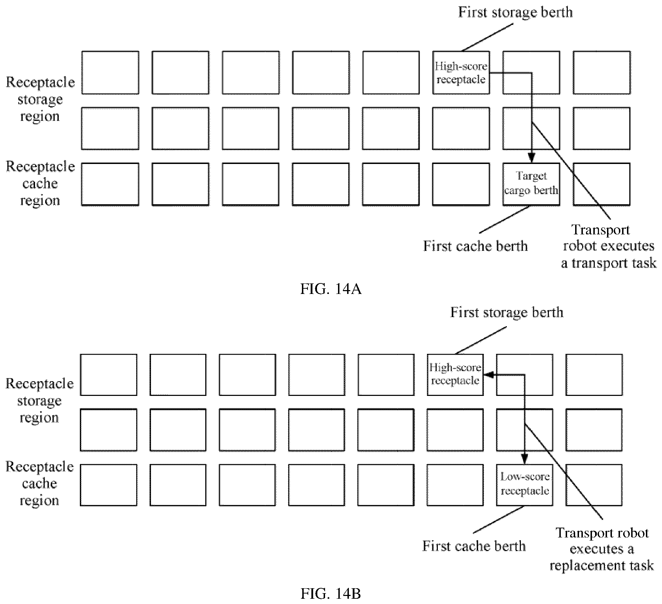

For example, FIG. 14A is a schematic diagram of an execution process of an intra-lane receptacle transport task according to an embodiment of the present disclosure. As shown in FIG. 14A, a receptacle cache region and a receptacle storage region are arranged on a shelf, a high-score receptacle refers to a to-be-transferred receptacle, and a target cargo berth refers to a first cache berth. In this case, a transport robot may execute a transport task to transport the high-score receptacle from the first storage berth to the first cache berth. FIG. 14B is a schematic diagram of an execution process of an intra-lane receptacle replacement task according to an embodiment of the present disclosure. As shown in FIG. 14B, a receptacle cache region and a receptacle storage region are arranged on a shelf, a high-score receptacle refers to a to-be-transferred receptacle, and a low-score receptacle refers to a receptacle stored at a first cache berth. A transport robot executes a replacement task to replace the low-score receptacle at the first cache berth with the high-score receptacle at a first storage berth.

In this embodiment of the present disclosure, the receptacle transport task or the receptacle replacement task may be executed in the same lane, to transfer the high-score receptacle in the receptacle storage region of the lane to the receptacle cache region of the same lane, thereby ensuring quality of a receptacle occupying a cache berth while ensuring a quantity of occupied cache berths in the receptacle cache region.

In this embodiment, when the first cache berth and the first storage berth belong to different lanes, that is, during cross-lane transferring, a receptacle transferring task is generated for the to-be-transferred receptacle based on the first storage berth and the first cache berth, and a specific implementation process is as follows:
generating a second receptacle transport task for the to-be-transferred receptacle based on the first storage berth, where the second receptacle transport task is configured to instruct a transport robot to transport the to-be-transferred receptacle from the first storage berth to a second cache berth, and the second cache berth and the first storage berth belong to a same lane; and
generating a transfer task for the to-be-transferred receptacle based on the second cache berth and the first cache berth in a case that the to-be-transferred receptacle is transported to the second cache berth, where the transfer task is configured to instruct the transfer robot to transfer the to-be-transferred receptacle from the second cache berth to the first cache berth.

It should be noted that the cross-lane transferring task is divided into two stages. The first stage is first transporting a to-be-transferred receptacle to a receptacle cache region in a same lane. The second stage is further transferring the to-be-transferred receptacle from the receptacle cache region in the same lane to a first cache berth in a receptacle cache region in another lane.

In an actual application, a second receptacle transport task may be generated for the to-be-transferred receptacle based on the first storage berth. A transport robot may transport the to-be-transferred receptacle from the first storage berth to a second cache berth based on the second receptacle transport task. The second cache berth and the first storage berth belong to a same lane. The second cache berth is any cache berth of the receptacle cache region in the same lane. That is, the first stage is transporting from the receptacle storage region to the receptacle cache region in the same lane.

Then, in a case that the to-be-transferred receptacle is transported to the second cache berth, a transfer task is generated for the to-be-transferred receptacle based on the second cache berth and the first cache berth. A transfer robot may transfer, based on the transfer task, the to-be-transferred receptacle from the second cache berth to the first cache berth, that is, cross-lane transfer, to transfer the to-be-transferred receptacle from the current lane to a cache berth in another lane.

In this embodiment of the present disclosure, the to-be-transferred receptacle may be transferred to a cache berth in another lane, which balances receptacle scores of receptacles stored in the receptacle cache regions of different lanes and avoids high-score receptacles from accumulating in a specific lane.

In this embodiment, the transfer task is generated for the to-be-transferred receptacle based on the second cache berth and the first cache berth, and a specific implementation process is as follows:
determining whether a receptacle is currently stored at the first cache berth;
generating, if a receptacle is stored, a third receptacle transport task for the receptacle stored at the first cache berth, where the third receptacle transport task is configured to instruct the transport robot to move the receptacle stored at the first cache berth from the first cache berth to a second storage berth, and the first cache berth and the second storage berth are located in a same lane or different lanes; and
generating, in a case that the receptacle stored at the first cache berth is transported from the first cache berth, the transfer task for the to-be-transferred receptacle based on the second cache berth and the first cache berth.

It should be noted that a specific implementation process of generating the transfer task for the to-be-transferred receptacle based on the second cache berth and the first cache berth is similar to the foregoing process of generating a receptacle transferring task for the to-be-transferred receptacle based on the first storage berth and the first cache berth, and details are not described in the present disclosure again.

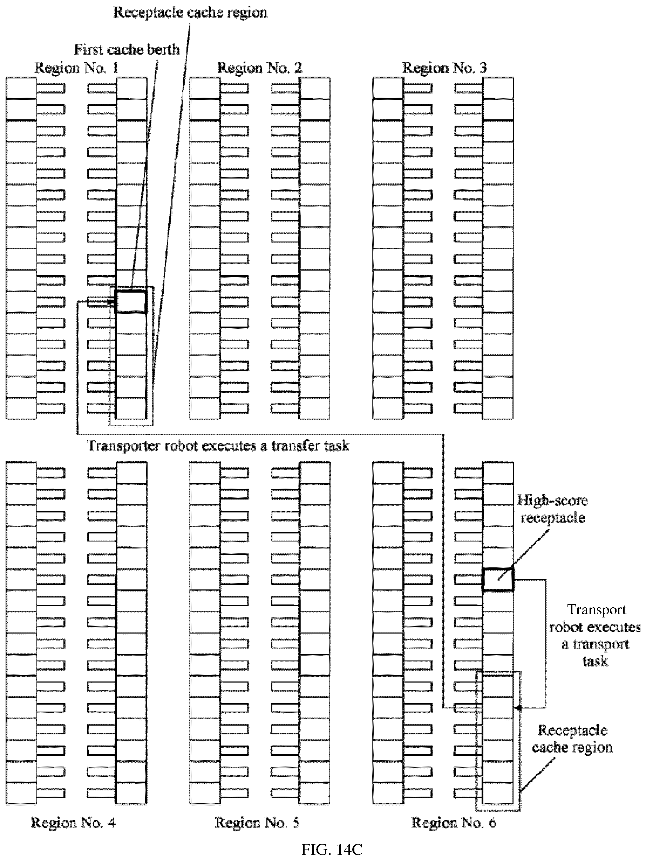

For example, FIG. 14C is a schematic diagram of an execution process of a cross-lane receptacle transport task according to an embodiment of the present disclosure. As shown in FIG. 14C, assuming that all receptacles stored at cache berths in a receptacle cache region of the lane in a region No. 6 are of high popularity, a current high-score receptacle on a shelf is not dominant, but in this case, there is an available cache berth in a region No. 1. That is, a first cache berth is a cache berth in a receptacle cache region of the region No. 1. In this case, a single-box transport task may be generated. Because transport needs to be performed across regions, and it is cumbersome for a transport robot to perform cross-region transport, as shown in FIG. 14C, a transport robot and a transfer robot transport a receptacle in a relay manner. That is, the transporter first performs a transport task, and then the transfer robot performs a transfer task.

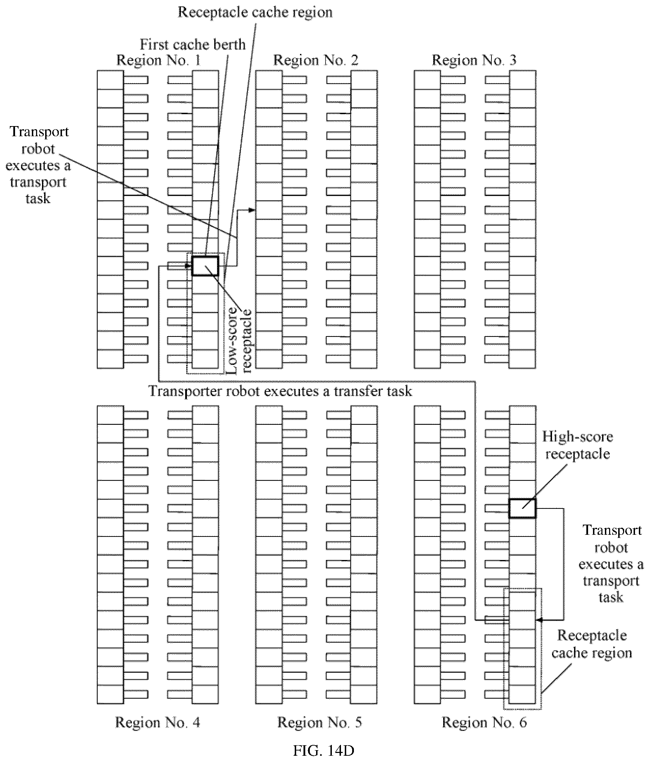

FIG. 14D is a schematic diagram of an execution process of a cross-lane receptacle replacement task according to an embodiment of the present disclosure. As shown in FIG. 14D, if it is difficult to find a vacant cache berth in a receptacle cache region in a region No. 6, in this case, a cross-region replacement task needs to be generated. It is assumed that a high-score receptacle the region No. 6 needs to be placed at a cache berth of a low-score receptacle in a region No. 1, and there is a low-popularity receptacle (that is, a low-score receptacle) at the cache berth. As shown in FIG. 14D, in this case, a transport task may be executed by a transport robot to transfer the low-score receptacle to an upper layer (for example, an upper layer of a region No. 2), and then, a transport process may be performed in the relay manner shown in FIG. 14C.

The warehousing scheduling method provided in the present disclosure may determine the occupancy proportion of the cache berths in the receptacle cache region, determine, in a case that the occupancy proportion of the cache berths exceeds the set proportion threshold, indicating that too many receptacles are stored in the receptacle cache region, and there may not be enough cache berths for performing receptacle handover, the to-be-released cache berth in the receptacle cache region based on the receptacle scores of the receptacles stored at the cache berths in the receptacle cache region, and generate the corresponding return task to return the to-be-returned receptacle at the to-be-released cache berth to the receptacle storage region, thereby dynamically controlling the occupancy proportion of the cache berths in the receptacle cache region, to ensure that there are enough cache berths in the receptacle cache region for the receptacle handover. In this way, in addition to being configured for receptacle handover, the receptacle cache region may also be configured for receptacle storage. That is, after picking of a receptacle at the workstation is completed, after conveying the receptacle back to the receptacle cache region from the workstation, the transfer robot does not need to convey the receptacle back to the receptacle storage region, and the receptacle can be stored directly in the cache region. Subsequently, transferring of the receptacle in the cache region is dynamically controlled based on the occupancy proportions of the cache berths in the receptacle cache region. The receptacle can be stored in the receptacle cache region, which improves reusability of the receptacle, thereby improving efficiency of outbound delivery of receptacles and target object picking efficiency, and greatly saving transportation resources of robots.

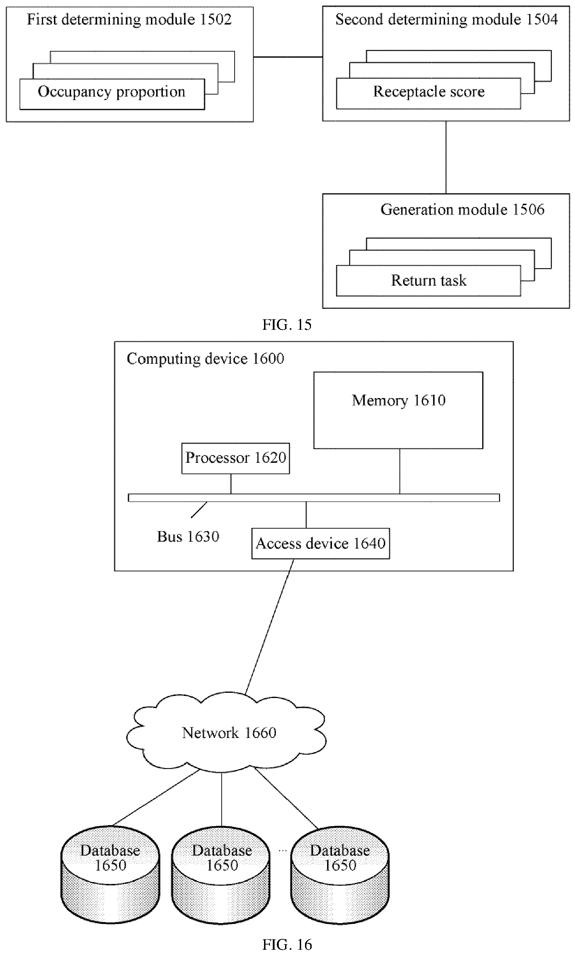

Corresponding to the embodiments of the aforementioned method, the present disclosure further provides an embodiment of a warehousing scheduling device. FIG. 15 shows a schematic structural diagram of a warehousing scheduling device according to an embodiment of the present disclosure. As shown in FIG. 15, the device includes: a first determining module 1502, a second determining module 1504, and a generation module 1506.

The first determining module 1502 configured to determine an occupancy proportion of cache berths in a receptacle cache region, where the receptacle cache region includes at least one cache berth.

The second determining module 1504 is configured to determine, in a case that the occupancy proportion of the cache berths exceeds a set proportion threshold, a receptacle score of a receptacle stored at each cache berth in the receptacle cache region, where the receptacle score is determined based on a to-be-executed picking task and a quantity of target objects in the receptacle.

The generation module 1506 is configured to determine a to-be-released cache berth in the receptacle cache region according to the receptacle score, and generate a return task for a to-be-returned receptacle at the to-be-released cache berth, where the return task is configured to instruct to return the to-be-returned receptacle from the to-be-released cache berth to the receptacle storage region.

The warehousing scheduling device provided in the present disclosure may determine the occupancy proportion of the cache berths in the receptacle cache region, determine, in a case that the occupancy proportion of the cache berths exceeds the set proportion threshold, indicating that too many receptacles are stored in the receptacle cache region, and there may not be enough cache berths for performing receptacle handover, the to-be-released cache berth in the receptacle cache region based on the receptacle scores of the receptacles stored at the cache berths in the receptacle cache region, and generate the corresponding return task to return the to-be-returned receptacle at the to-be-released cache berth to the receptacle storage region, thereby dynamically controlling the occupancy proportion of the cache berths in the receptacle cache region, to ensure that there are enough cache berths in the receptacle cache region for the receptacle handover. In this way, in addition to being configured for receptacle handover, the receptacle cache region may also be configured for receptacle storage. That is, after picking of a receptacle at the workstation is completed, after conveying the receptacle back to the receptacle cache region from the workstation, the transfer robot does not need to convey the receptacle back to the receptacle storage region, and the receptacle can be stored directly in the cache region. Subsequently, transferring of the receptacle in the cache region is dynamically controlled based on the occupancy proportions of the cache berths in the receptacle cache region. The receptacle can be stored in the receptacle cache region, which improves reusability of the receptacle, thereby improving efficiency of outbound delivery of receptacles and target object picking efficiency, and greatly saving transportation resources of robots.

In some embodiments, the first determining module 1502 is further configured to:
determine a quantity of occupied cache berths in the receptacle cache region;
determine a quantity of to-be-occupied cache berths and a quantity of to-be-released cache berths according to a current receptacle transferring task; and
determine the occupancy proportion of the cache berths in the receptacle cache region according to the quantity of occupied cache berths, the quantity of to-be-occupied cache berths, and the quantity of to-be-released cache berths.

In some embodiments, the generation module 1506 is further configured to:
determine a difference between the occupancy proportion and the set proportion threshold, and determine a quantity of to-be-released cache berths according to the difference; and
sort the receptacle scores of the receptacles stored at the cache berths and select, according to a sorting result, to-be-released cache berths whose quantity is the quantity.

In some embodiments, the generation module 1506 is further configured to:
determine a target storage berth corresponding to the to-be-released cache berth; and
generate the return task based on the to-be-released cache berth and the target storage berth, where the return task is configured for returning the to-be-returned receptacle stored at the to-be-released cache berth to the target storage berth.

In some embodiments, the device further includes a transferring module, configured to:
determine, every first preset duration, a to-be-transferred receptacle in the receptacle storage region, where the to-be-transferred receptacle is to be transferred to the receptacle cache region;
determine a first cache berth corresponding to the to-be-transferred receptacle in the receptacle cache region; and
generate a receptacle transferring task for the to-be-transferred receptacle based on a first storage berth and the first cache berth, where the first storage berth is a storage location of the to-be-transferred receptacle in the receptacle storage region, and the receptacle transferring task is configured to instruct to transfer the to-be-transferred receptacle from the first storage berth to the first cache berth.

In some embodiments, the warehousing system includes at least two lanes, where the receptacle storage region and the receptacle cache region are arranged in each lane. The transferring module is further configured to:
determine whether there is an available cache berth in a first receptacle cache region, where the first receptacle cache region and the receptacle storage region in which the to-be-transferred receptacle is located belong to a same lane;
determine, if there is an available cache berth, the first cache berth from the available cache berth; and
determine the first cache berth from a second receptacle cache region if there is no available cache berth, where the second receptacle cache region and the receptacle storage region in which the to-be-transferred receptacle is located do not belong to a same lane.

In some embodiments, the first cache berth and the first storage berth belong to a same lane. The transferring module is further configured to:
determine whether a receptacle is currently stored at the first cache berth;
generate, if a receptacle is stored, a replacement task for the receptacle stored at the first cache berth, where the replacement task is configured to instruct a transport robot to return the receptacle stored at the first cache berth to the receptacle storage region and transport the to-be-transferred receptacle from the first storage berth to the first cache berth; and
generate, if no receptacle is stored, a first receptacle transport task for the to-be-transferred receptacle based on the first storage berth and the first cache berth, where the first receptacle transport task is configured to instruct the transport robot to transport the to-be-transferred receptacle from the first storage berth to the first cache berth.

In some embodiments, the first cache berth and the first storage berth belong to different lanes. The transferring module is further configured to:
generate a second receptacle transport task for the to-be-transferred receptacle based on the first storage berth, where the second receptacle transport task is configured to instruct a transport robot to transport the to-be-transferred receptacle from the first storage berth to a second cache berth, and the second cache berth and the first storage berth belong to a same lane; and
generate a transfer task for the to-be-transferred receptacle based on the second cache berth and the first cache berth in a case that the to-be-transferred receptacle is transported to the second cache berth, where the transfer task is configured to instruct the transfer robot to transfer the to-be-transferred receptacle from the second cache berth to the first cache berth.

In some embodiments, the transferring module is further configured to:
determine whether a receptacle is currently stored at the first cache berth;
generate, if a receptacle is stored, a third receptacle transport task for the receptacle stored at the first cache berth, where the third receptacle transport task is configured to instruct the transport robot to move the receptacle stored at the first cache berth from the first cache berth to a second storage berth, and the first cache berth and the second storage berth are located in a same lane or different lanes; and
generate, in a case that the receptacle stored at the first cache berth is transported from the first cache berth, the transfer task for the to-be-transferred receptacle based on the second cache berth and the first cache berth.

In some embodiments, the device further includes a scoring module, configured to:
determine a quantity of picking tasks matching with at least one target object group in a first receptacle, where the first receptacle is any receptacle stored in the receptacle cache region and the receptacle storage region, and target objects with a same target object identifier form one target object group;
determine a popularity value of the first receptacle according to the quantity of picking tasks matching with the at least one target object group;
determine a receptacle type of the first receptacle, and determine a base score of the first receptacle according to the receptacle type; and
determine a receptacle score of the first receptacle according to the popularity value and the base score.

In some embodiments, the scoring module is further configured to:
determine, in a case that the receptacle type of the first receptacle is a hit receptacle, that the base score of the first receptacle is a first set value, where the hit receptacle refers to a receptacle selected to execute a picking task, and the first set value is a lower boundary value of a first score range;
determine, in a case that the receptacle type of the first receptacle is a non-hit receptacle, and the first receptacle is a receptacle in the receptacle cache region, that the base score of the first receptacle is a second set value, and the second set value is a lower boundary value of a second score range; and
determine, in a case that the receptacle type of the first receptacle is a non-hit receptacle, and the first receptacle is a receptacle in the receptacle storage region, that the base score of the first receptacle is a third set value, where the third set value is a lower boundary value of a third score range, where
the first score range, the second score range, and the third score range are obtained through division based on the receptacle scores, the first set value is larger than the second set value, and the second set value is larger than the third set value.

The foregoing is a schematic solution of a warehousing scheduling device according to this embodiment. It should be noted that the technical solution of the warehousing scheduling device and the technical solution of the warehousing scheduling method belong to the same conception, and for detailed content of the technical solution of the warehousing scheduling device that is not described in detail, reference may be made to the description of the technical solution of the foregoing warehousing scheduling method.

FIG. 16 is a structural block diagram of a computing device 1600 according to this embodiment of the present disclosure. Components of the computing device 1600 include, but are not limited to, a memory 1610 and a processor 1620. The processor 1620 and the memory 1610 are connected through a bus 1630. A database 1650 is configured to store data.

The computing device 1600 further includes an access device 1640. The access device 1640 enables the computing device 1600 to perform communication through one or more networks 1660. Examples of the networks includes a public switched telephone network (PSTN), a local area network (LAN), a wide area network (WAN, Wide Area Network), a personal area network (PAN), or a combination of communication networks such as the Internet. The access device 1640 may include one or more of wired or wireless network interfaces (for example, a network interface card (NIC)) of any types, such as an IEEE802.11 wireless local area network (WLAN) wireless interface, a worldwide interoperability for microwave access (Wi-MAX) interface, an Ethernet interface, a universal serial bus (USB) interface, a cellular network interface, a Bluetooth interface, a near field communication (NFC) interface, and the like.

In an embodiment, the foregoing components and other components not shown in FIG. 16 of the computing device 1600 may be connected, for example, through the bus. It should be understood that the structural block diagram of the computing device shown in FIG. 16 is merely exemplary, and is not intended to limit the scope of the present disclosure. A person skilled in the art may add or replace other components according to a requirement.

The computing device 1600 may be a stationary or mobile computing device of any type, including a mobile computer, a mobile computing device (for example, a tablet computer, a person digital assistant, a laptop computer, a notebook, or a netbook), a mobile phone (for example, a smartphone), a wearable computing device (for example, a smartwatch or smart glasses), a mobile device of another type, or a stationary computing device such as a desktop computer or a personal computer (PC). The computing device 1600 may alternatively be a mobile or stationary server.

The processor 1620 is configured to execute the following computer-executable instructions, to implement the steps of the foregoing warehousing scheduling method.

The foregoing is a schematic solution of a computing device according to this embodiment. It should be noted that the technical solution of the computing device and the technical solution of the warehousing scheduling method belong to the same conception, and for detailed content of the technical solution of the computing device that is not described in detail, reference may be made to the description of the technical solution of the foregoing warehousing scheduling method.

An embodiment of the present disclosure further provides a computer-readable storage medium, having computer instructions stored therein. The computer instructions, when executed by a processor, are configured to implement the steps of the warehousing scheduling method.

The foregoing is a schematic solution of a computer-readable storage medium according to this embodiment. It should be noted that the technical solution of the storage medium and the technical solution of the warehousing scheduling method belong to the same conception, and for detailed content of the technical solution of the storage medium that is not described in detail, reference may be made to the description of the technical solution of the foregoing warehousing scheduling method.

An embodiment of the present disclosure further provides a computer program product, including a computer program. When the computer program is executed by a processor, the steps of the foregoing warehousing scheduling method are implemented.

Specific embodiments of the present disclosure are described above. Other embodiments are within the scope of the appended claims. In some cases, the actions or steps recited in the claims may be performed in a different order than in the embodiments and the expected result may still be achieved. In addition, the processes depicted in the accompanying drawings do not necessarily require the particular order shown or sequential order to achieve the expected results. In some embodiments, multitasking and parallel processing are also possible or may be advantageous.

The computer instructions include computer program code. The computer program code may be in a source code form, a target object code form, executable file or some intermediate forms, or the like. The computer-readable medium may include: any entity or apparatus that is capable of carrying the computer program code, a recording medium, a USB flash drive, a removable hard disk, a magnetic disk, an optical disc, a read-only memory (ROM), a random access memory (RAM), an electric carrier signal, a telecommunication signal and a software distribution medium, or the like.

It should be noted that for ease of description, the foregoing method embodiments are described as a series of action combinations. However, a person skilled in the art should know that the present disclosure is not limited to the described order of the actions because some steps may be performed in another order or performed at the same time according to the present disclosure. It should be further appreciated by a person skilled in the art that the embodiments described in this specification all belong to preferred embodiments, and the actions and modules are not necessarily required by the present disclosure.

In the foregoing embodiments, the description of each embodiment has respective focuses. For a part that is not described in detail in an embodiment, reference may be made to related descriptions in other embodiments.

Other embodiments of the present disclosure will be apparent to a person skilled in the art from consideration of the specification and practicing the invention that is disclosed herein. This application is intended to cover any variation, use, or adaptive change of the present disclosure. These variations, uses, or adaptive changes follow the general principles of the present disclosure and include common general knowledge or common technical means in the art that are not disclosed in the present disclosure. The specification and the embodiments are considered as merely exemplary, and the scope and spirit of the present disclosure are pointed out in the following claims.

It should be understood that the present disclosure is not limited to the precise structures described above and shown in the accompanying drawings, and various modifications and changes can be made without departing from the scope of the present application. The scope of the present disclosure is subject only to the appended claims.

## Claims

1. A warehousing system, comprising:
a warehouse storage area, comprising a plurality of shelves arranged in a matrix, wherein a receptacle cache region and a receptacle storage region are arranged on the shelf;
a workstation area, comprising at least one workstation, wherein the workstation is configured for processing a receptacle;
a transport robot, configured to be responsible for deploying the receptacle between the receptacle cache region and the receptacle storage region; and
a transfer robot, configured to be responsible for exchanging the receptacle between the receptacle cache region and the workstation.

2. The warehousing system according to claim 1, wherein in the warehouse storage area, a plurality of transverse channels are formed between a plurality of transversely arranged shelves, and a plurality of longitudinal channels are formed between a plurality of longitudinally arranged shelves; and the plurality of transverse channels and the plurality of longitudinal channels are arranged in a staggered manner.

3. The warehousing system according to claim 2, wherein the transverse channel is configured for the transfer robot to pass; and the vertical channel is configured for the transport robot to pass.

4. The warehousing system according to claim 3, wherein the transport robot is configured to be switched from one longitudinal channel to another longitudinal channel through the transverse channel.

5. The warehousing system according to claim 3, wherein the transverse channel is configured for different transfer robots to travel simultaneously in both directions.

6. The warehousing system according to any one of claims 1 to 5, wherein the receptacle cache region and the receptacle storage region are arranged sequentially alternately in a vertical direction of the shelf; or at least one layer of receptacle cache region is arranged, and the at least one layer of receptacle cache region is located below the receptacle storage region.

7. The warehousing system according to claim 6, wherein a lowest layer of the shelf is the receptacle cache region, and the receptacle cache region comprises a receptacle cache berth and a cache region channel arranged adjacent and parallel to each other in a horizontal direction; and the transfer robot is configured to travel in the cache region channel when being fully-loaded or unloaded.

8. The warehousing system according to claim 7, wherein the cache region channel extends along a longitudinal direction of the shelf, to form a longitudinal cache region channel; and/or the cache region channel extends along a transverse direction of the shelf, to form a transverse cache region channel.

9. The warehousing system according to claim 7, wherein an unloaded travel channel is formed between a bottom portion of the receptacle cache berth and the ground, for the transfer robot to travel when the transfer robot is unloaded.

10. The warehousing system according to any one of claims 1 to 5, wherein the transfer robot is configured to transfer the receptacle on the receptacle cache region to a shelf platform of the workstation; and the workstation is configured to process the receptacle located on the shelf platform.

11. The receptacle transfer system according to any one of claims 1 to 5, wherein the workstation comprises at least one processing region, and is configured to process the receptacle on the transfer robot located in the processing region.

12. The receptacle transfer system according to claim 11, wherein the workstation is configured to send an instruction of picking up the receptacle from the receptacle cache region to a next transfer robot after the processing on the receptacle on the transfer robot in the processing region is completed.

13. The warehousing system according to claim 11, wherein the workstation comprises at least one queuing region, and the transfer robot is configured to queue sequentially in the queuing region when the processing region is occupied.

14. The warehousing system according to claim 13, wherein the processing region corresponds to the queuing region, and at least two processing regions and at least two queuing regions are arranged respectively.

15. The warehousing system according to any one of claims 1 to 5, wherein the workstation comprises a display, wherein the display is configured to display information for guiding operation personnel.

16. The warehousing system according to any one of claims 1 to 5, wherein the workstation comprises a light guidance device, and the light guidance device is configured to project information for assisting operation personnel to perform an operation.

17. The warehousing system according to any one of claims 1 to 5, wherein the workstation comprises an interaction button, and the interaction button is configured for operation personnel to confirm interaction with a system after the operation personnel complete an operation.

18. The warehousing system according to any one of claims 1 to 5, wherein the workstation comprises a cargo receptacle position and attitude detection device, and the cargo receptacle position and attitude detection device is configured to detect an attitude of the receptacle on the transfer robot.

19. The warehousing system according to any one of claims 1 to 5, wherein the workstation comprises a safety protection device, and the safety protection device is a protection door configured to prevent the transfer robot from entering the workstation.

20. The warehousing system according to any one of claims 1 to 5, wherein the workstation comprises a safety protection device and a control unit, wherein the safety protection device is a detection sensor; and the control unit sends an instruction of stopping entering the workstation to the transfer robot based on an electrical signal detected by the detection sensor and indicating entering the processing region of the workstation by mistake.

21. The warehousing system according to any one of claims 1 to 5, wherein the workstation comprises an identification device, and the identification device is configured to obtain information about the receptacle on the transfer robot.

22. The warehousing system according to any one of claims 1 to 5, wherein the workstation comprises a visual identification device and a control unit, and the identification device is configured to: identify a type and a quantity of goods in the receptacle; and/or identify an operation gesture of operation personnel; and the control unit sends an alarm signal based on error information obtained by the visual identification device.

23. The warehousing system according to any one of claims 1 to 22, wherein a high-speed travel area is arranged between the warehouse storage area and the workstation area; and a travel speed of the transfer robot in the high-speed travel area is greater than a travel speed of the transfer robot in the warehouse storage area.

24. A shelf, for a warehousing system according to any one of claims 1 to 23, the shelf comprising:
a receptacle cache region; and
a receptacle storage region.

25. The shelf according to claim 24, wherein the receptacle cache region and the receptacle storage region are arranged sequentially alternately in a vertical direction of the shelf; or at least one layer of receptacle cache region is arranged, and the at least one layer of receptacle cache region is located below the receptacle storage region.

26. The shelf according to claim 25, wherein a lowest layer of the shelf is the receptacle cache region, and the receptacle cache region comprises a receptacle cache berth and a cache region channel arranged adjacent and parallel to each other in a horizontal direction.

27. The shelf according to claim 26, wherein the cache region channel extends along a longitudinal direction of the shelf, to form a longitudinal cache region channel; and/or the cache region channel extends along a transverse direction of the shelf, to form a transverse cache region channel.

28. A transfer robot, for a warehousing system according to any one of claims 1 to 23, the transfer robot comprising:
a chassis mechanism;
a lifting mechanism arranged on the chassis mechanism; and
a top plate arranged on the lifting mechanism, and driven by the lifting mechanism to rise or fall, wherein a positioning mechanism configured to be fitted with a bottom portion of a receptacle is arranged on a surface of the top plate for contact with the receptacle, and the top plate is configured to raise or lower the receptacle.

29. The transfer robot according to claim 28, wherein the positioning mechanism comprises a positioning pin or a positioning hole; and
wherein the positioning pin is arranged on the top plate, and the positioning hole configured to be fitted with the positioning pin is arranged in the bottom portion of the receptacle; or
the positioning hole is arranged in the top plate, and the positioning pin configured to be fitted with the positioning hole is arranged at the bottom portion of the receptacle.

30. The transfer robot according to claim 29, wherein at least two positioning pins or positioning holes are arranged, and distributed in regions on two opposite sides of the top plate or the receptacle.

31. The transfer robot according to claim 29, wherein at least a top surface of the positioning pin is of a conical surface structure, and a shape of the positioning hole matches with a shape of the positioning pin.

32. The transfer robot according to any one of claims 28 to 31, wherein the lifting mechanism further comprises a drive assembly and a scissor assembly comprising at least one scissor unit, wherein the scissor assembly has a bottom end movably connected to the chassis mechanism, and a top end movably connected to the top plate, and the drive assembly is configured to drive the scissor assembly to rise or fall in a vertical direction.

33. The transfer robot according to claim 32, wherein the scissor unit comprises two, a first connecting rod component and a second connecting rod component, arranged in an intersecting manner and hinged to each other at an intersection;
a top end of the first connecting rod component of the scissor unit adjacent to the top plate is hinged to the top plate, and a top end of the second connecting rod component of the scissor unit adjacent to the top plate is configured to move in a horizontal direction relative to the top plate;
a bottom end of the first connecting rod component of the scissor unit adjacent to the chassis mechanism is hinged to the chassis mechanism, and a bottom end of the second connecting rod component of the scissor unit adjacent to the chassis mechanism is configured to move in the horizontal direction relative to the chassis mechanism; and
two adjacent scissor units are hinged to each other.

34. The transfer robot according to claim 33, wherein a first guide mechanism extending along the horizontal direction is arranged at a bottom portion of the top plate, and the second connecting rod component of the scissor unit adjacent to the top plate is configured to move horizontally in the first guide mechanism; and
a second guide mechanism extending along the horizontal direction is arranged at a top portion of the chassis mechanism, and the second connecting rod component of the scissor unit adjacent to the chassis mechanism is configured to move horizontally in the second guide mechanism.

35. The transfer robot according to claim 34, wherein a roller is arranged at an end head of the second connecting rod component of the scissor unit configured to be fitted with the first guide mechanism or the second guide mechanism, and the roller is configured to roll along the first guide mechanism or the second guide mechanism.

36. The transfer robot according to claim 33, wherein the scissor assembly comprises two scissor units, the scissor unit located above comprises a first upper connecting rod component and a second upper connecting rod component hinged to each other, and the scissor unit located below comprises a first lower connecting rod component and a second lower connecting rod component hinged to each other;
a top end of the first upper connecting rod component is hinged to the top plate, a bottom end of the first upper connecting rod component is hinged to a top end of the first lower connecting rod component, a top end of the second upper connecting rod component is supported at a bottom portion of the top plate and configured to move in the horizontal direction relative to the top plate, and a bottom end of the second upper connecting rod component is hinged to a top end of the second lower connecting rod component; and a bottom end of the first lower connecting rod component is hinged to the chassis mechanism, and a bottom end of the second lower connecting rod component is supported at the chassis mechanism and configured to move in the horizontal direction relative to the chassis mechanism.

37. The transfer robot according to claim 32, wherein the drive assembly comprises a rocker, a drive motor, and a cam connected to an output end of the drive motor, wherein one end of the rocker is hinged to the cam, and the other end of the rocker is hinged to the scissor assembly; and the drive motor is configured to drive the scissor assembly to rise or fall through the rocker.

38. A transfer system, comprising a transfer robot according to any one of claims 28 to 37 and at least one shelf, wherein the transfer robot is configured to raise a receptacle located on the shelf or is configured to place a receptacle on a top plate onto the shelf.

39. The transfer system according to claim 38, wherein the shelf comprises a shelf body, the shelf body comprises a plurality of first receptacle berths arranged in a row, the first receptacle berth comprises a support portion configured to support the receptacle, and the support portion has an open end for the transfer robot to pass.

40. The transfer system according to claim 39, wherein the shelf further comprises a second receptacle berth configured for placing the receptacle, the second receptacle berth is arranged above the first receptacle berth, and the transfer system further comprises a transport robot, wherein the transport robot is configured to transport the receptacle at the second receptacle berth to the first receptacle berth.

41. The transfer system according to claim 40, wherein at least one layer of first receptacle berth is arranged and located at a bottom portion of the second receptacle berth on the shelf body.

42. A warehousing scheduling method, performed by using a warehousing system according to any one of claims 1 to 23, the warehousing scheduling method comprising:
determining an occupancy proportion of cache berths in a receptacle cache region, wherein the receptacle cache region comprises at least one cache berth;
determining a receptacle score of a receptacle stored at each cache berth in the receptacle cache region, in a case that the occupancy proportion of the cache berths exceeds a set proportion threshold, wherein the receptacle score is determined based on a to-be-executed picking task and a quantity of target objects in the receptacle; and
determining a to-be-released cache berth in the receptacle cache region according to the receptacle score, and generating a return task for a to-be-returned receptacle at the to-be-released cache berth, wherein the return task is configured to instruct to return the to-be-returned receptacle from the to-be-released cache berth to a receptacle storage region.

43. The warehousing scheduling method according to claim 42, wherein the determining an occupancy proportion of cache berths in a receptacle cache region comprises:
determining a quantity of occupied cache berths in the receptacle cache region;
determining a quantity of to-be-occupied cache berths and a quantity of to-be-released cache berths according to a current receptacle transferring task; and
determining the occupancy proportion of the cache berths in the receptacle cache region according to the quantity of occupied cache berths, the quantity of to-be-occupied cache berths, and the quantity of to-be-released cache berths.

44. The warehousing scheduling method according to claim 42, wherein the determining a to-be-released cache berth in the receptacle cache region according to the receptacle score comprises:
determining a difference between the occupancy proportion and the set proportion threshold, and determining a quantity of to-be-released cache berths according to the difference; and
sorting the receptacle scores of the receptacles stored at the cache berths and selecting to-be-released cache berths whose quantity is the quantity according to a sorting result.

45. The warehousing scheduling method according to claim 42, wherein the generating a return task for a to-be-returned receptacle at the to-be-released cache berth comprises:
determining a target storage berth corresponding to the to-be-released cache berth; and
generating the return task based on the to-be-released cache berth and the target storage berth, wherein the return task is configured for returning the to-be-returned receptacle stored at the to-be-released cache berth to the target storage berth.

46. The warehousing scheduling method according to any one of claims 42 to 45, wherein before the determining a receptacle score of a receptacle stored at each cache berth in the receptacle cache region, the method further comprises:
determining, every first preset duration, a to-be-transferred receptacle in the receptacle storage region, wherein the to-be-transferred receptacle is to be transferred to the receptacle cache region;
determining a first cache berth corresponding to the to-be-transferred receptacle in the receptacle cache region; and
generating a receptacle transferring task for the to-be-transferred receptacle based on a first storage berth and the first cache berth, wherein the first storage berth is a storage location of the to-be-transferred receptacle in the receptacle storage region, and the receptacle transferring task is configured to instruct to transfer the to-be-transferred receptacle from the first storage berth to the first cache berth.

47. The warehousing scheduling method according to claim 46, wherein the warehousing system comprises at least two lanes, and the receptacle storage region and the receptacle cache region are arranged in each lane; and
the determining a first cache berth corresponding to the to-be-transferred receptacle in the receptacle cache region comprises:
determining whether there is an available cache berth in a first receptacle cache region, wherein the first receptacle cache region and the receptacle storage region in which the to-be-transferred receptacle is located belong to a same lane;
determining the first cache berth from the available cache berth, if there is the available cache berth; and
determining the first cache berth from a second receptacle cache region, if there is no available cache berth, wherein the second receptacle cache region and the receptacle storage region in which the to-be-transferred receptacle is located do not belong to a same lane.

48. The warehousing scheduling method according to claim 47, wherein the first cache berth and the first storage berth belong to a same lane; and
the generating a receptacle transferring task for the to-be-transferred receptacle based on a first storage berth and the first cache berth comprises:
determining whether a receptacle is currently stored at the first cache berth;
generating a replacement task for the receptacle stored at the first cache berth, if the receptacle is stored at the first cache berth, wherein the replacement task is configured to instruct a transport robot to return the receptacle stored at the first cache berth to the receptacle storage region and transport the to-be-transferred receptacle from the first storage berth to the first cache berth; and
generating a first receptacle transport task for the to-be-transferred receptacle based on the first storage berth and the first cache berth, if no receptacle is stored, wherein the first receptacle transport task is configured to instruct the transport robot to transport the to-be-transferred receptacle from the first storage berth to the first cache berth.

49. The warehousing scheduling method according to claim 47, wherein the first cache berth and the first storage berth belong to different lanes; and
the generating a receptacle transferring task for the to-be-transferred receptacle based on a first storage berth and the first cache berth comprises:
generating a second receptacle transport task for the to-be-transferred receptacle based on the first storage berth, wherein the second receptacle transport task is configured to instruct a transport robot to transport the to-be-transferred receptacle from the first storage berth to a second cache berth, and the second cache berth and the first storage berth belong to a same lane; and
generating a transfer task for the to-be-transferred receptacle based on the second cache berth and the first cache berth in a case that the to-be-transferred receptacle is transported to the second cache berth, wherein the transfer task is configured to instruct a transfer robot to transfer the to-be-transferred receptacle from the second cache berth to the first cache berth.

50. The warehousing scheduling method according to claim 49, wherein the generating a transfer task for the to-be-transferred receptacle based on the second cache berth and the first cache berth comprises:
determining whether a receptacle is currently stored at the first cache berth;
generating a third receptacle transport task for the receptacle stored at the first cache berth, if the receptacle is stored at the first cache berth, wherein the third receptacle transport task is configured to instruct the transport robot to move the receptacle stored at the first cache berth from the first cache berth to a second storage berth, and the first cache berth and the second storage berth are located in a same lane or different lanes; and
generating the transfer task for the to-be-transferred receptacle based on the second cache berth and the first cache berth, in a case that the receptacle stored at the first cache berth is transported from the first cache berth.

51. The warehousing scheduling method according to any one of claims 42 to 45, wherein before the determining a receptacle score of a receptacle stored at each cache berth in the receptacle cache region, the method further comprises:
determining a quantity of picking tasks matching with at least one target object group in a first receptacle, wherein the first receptacle is any receptacle stored in the receptacle cache region and the receptacle storage region, and target objects with a same target object identifier form one target object group;
determining a popularity value of the first receptacle according to the quantity of picking tasks matching with the at least one target object group;
determining a receptacle type of the first receptacle, and determining a base score of the first receptacle according to the receptacle type; and
determining a receptacle score of the first receptacle according to the popularity value and the base score.

52. The warehousing scheduling method according to claim 51, wherein the determining a base score of the first receptacle according to the receptacle type comprises:
determining that the base score of the first receptacle is a first set value, in a case that the receptacle type of the first receptacle is a hit receptacle, wherein the hit receptacle refers to a receptacle selected to execute the picking task, and the first set value is a lower boundary value of a first score range;
determining that the base score of the first receptacle is a second set value, in a case that the receptacle type of the first receptacle is a non-hit receptacle, and the first receptacle is a receptacle in the receptacle cache region, wherein the second set value is a lower boundary value of a second score range; and
determining that the base score of the first receptacle is a third set value, in a case that the receptacle type of the first receptacle is a non-hit receptacle, and the first receptacle is a receptacle in the receptacle storage region, wherein the third set value is a lower boundary value of a third score range,
wherein the first score range, the second score range, and the third score range are obtained through division based on the receptacle scores, the first set value is larger than the second set value, and the second set value is larger than the third set value.

53. A warehousing scheduling device, comprising:
a first determining module, configured to determine an occupancy proportion of cache berths in a receptacle cache region, wherein the receptacle cache region comprises at least one cache berth;
a second determining module, configured to determine a receptacle score of a receptacle stored at each cache berth in the receptacle cache region, in a case that the occupancy proportion of the cache berths exceeds a set proportion threshold, wherein the receptacle score is determined based on a to-be-executed picking task and a quantity of target objects in the receptacle; and
a generation module, configured to determine a to-be-released cache berth in the receptacle cache region according to the receptacle score, and generate a return task for a to-be-returned receptacle at the to-be-released cache berth, wherein the return task is configured to instruct to return the to-be-returned receptacle from the to-be-released cache berth to a receptacle storage region.

54. A computing device, comprising:
a processor; and
a memory, configured to store computer-executable instructions,
wherein the processor is configured to execute the computer-executable instructions, to implement steps of a warehousing scheduling method according to any one of claims 42 to 52.

55. A computer-readable storage medium, having computer instructions stored therein, wherein when the instructions are executed by a processor, steps of a warehousing scheduling method according to any one of claims 42 to 52 are implemented.

56. A computer program product, comprising a computer program, wherein when the computer program is executed by a processor, steps of a warehousing scheduling method according to any one of claims 42 to 52 are implemented.
